(19) Europäisches Patentamt
European Patent Office
Office européen des brevets

(11) **EP 3 765 186 B1**

(12) **FASCICULE DE BREVET EUROPEEN**

(45) Date de publication et mention
de la délivrance du brevet:
**23.03.2022 Bulletin 2022/12**

(21) Numéro de dépôt: **19709917.9**

(22) Date de dépôt: **08.03.2019**

(51) Classification Internationale des Brevets (IPC):
**B01J 20/20** (2006.01)    **B01J 20/28** (2006.01)
**B01J 20/34** (2006.01)    **C02F 1/28** (2006.01)
**C02F 1/461** (2006.01)    **C02F 1/467** (2006.01)
**C02F 101/34** (2006.01)

(52) Classification Coopérative des Brevets (CPC):
**B01J 20/3416; B01J 20/20; B01J 20/28023;
B01J 20/28057; B01J 20/28088; B01J 20/3441;
C02F 1/283; C02F 1/4672;** C02F 2001/46147;
C02F 2001/46161; C02F 2101/345; C02F 2303/16;
C02F 2305/026

(86) Numéro de dépôt international:
**PCT/EP2019/055803**

(87) Numéro de publication internationale:
**WO 2019/175038 (19.09.2019 Gazette 2019/38)**

(54) **DISPOSITIF DE RÉGÉNERATION DU CHARBON ACTIF**

VORRICHTUNG ZUR REGENERATION VON AKTIVKOHLE

DEVICE FOR THE REGENERATION OF ACTIVE CARBON

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.03.2018 FR 1852190**

(43) Date de publication de la demande:
**20.01.2021 Bulletin 2021/03**

(73) Titulaire: **Universite Gustave Eiffel
77420 Champs-sur-Marne (FR)**

(72) Inventeurs:
• **OTURAN, Mehmet Ali
94350 VILLIERS SUR MARNE (FR)**
• **PECHAUD, Yoan
92140 CLAMART (FR)**
• **TRELLU, Clément
94360 Bry-sur-Marne (FR)**
• **OTURAN, Nihal
94350 VILLIERS SUR MARNE (FR)**

(74) Mandataire: **Regimbeau
20, rue de Chazelles
75847 Paris Cedex 17 (FR)**

(56) Documents cités:
**US-A- 5 904 832**

• **JENNIFER A. BAÑUELOS ET AL: "Novel
Electro-Fenton Approach for Regeneration of
Activated Carbon", ENVIRONMENTAL SCIENCE
& TECHNOLOGY, vol. 47, no. 14, 19 juin 2013
(2013-06-19) , pages 7927-7933, XP055513056, US
ISSN: 0013-936X, DOI: 10.1021/es401320e cité
dans la demande**
• **ZHAN JUHONG ET AL: "Electro-peroxone
regeneration of phenol-saturated activated
carbon fiber: The effects of irreversible
adsorption and operational parameters",
CARBON, ELSEVIER, OXFORD, GB, vol. 109, 13
août 2016 (2016-08-13), pages 321-330,
XP029786633, ISSN: 0008-6223, DOI:
10.1016/J.CARBON.2016.08.034**

**Description**

**INTRODUCTION**

Le développement de systèmes de traitement de l'eau durables atteignant des taux élevés d'élimination des micropolluants est un défi important pour l'ingénierie environnementale. Le charbon actif (CA) est actuellement largement utilisé dans les usines de traitement de l'eau parce qu'il s'est avéré être un adsorbant efficace pour l'élimination des composés organiques de l'eau.[1-3] Ceci est dû à sa grande surface spécifique, à sa microporosité interne ainsi qu'à la présence de grandes quantités de divers groupes fonctionnels de surface.[4]

Cependant, c'est une simple étape de séparation : les polluants organiques ne sont pas dégradés après cette étape. Le CA est chargé/saturé en polluants organiques et devient un déchet qui doit être traité. Le traitement doit conduire à la fois à la régénération/réutilisation du CA (afin d'améliorer la durabilité et la rentabilité du procédé CA) et à la dégradation des polluants organiques (afin d'éviter toute contamination de l'environnement).

Alors que l'efficacité et les mécanismes d'adsorption d'une large gamme de composés organiques sur divers matériaux de CA ont déjà été largement rapportés dans la littérature,[3,5] il est toujours nécessaire de développer des procédés innovants et efficaces pour la régénération du CA usé/saturé/chargé en polluants organiques.

La régénération thermique est le procédé le plus largement utilisé. L'efficacité dépend étroitement de la nature des composés organiques adsorbés et de la nature des interactions avec la surface du CA. La régénération thermique avec une atmosphère inerte conduit souvent à une faible récupération de la capacité d'adsorption initiale en raison de la désorption insuffisante des composés chimisorbés.[6] De plus, un traitement supplémentaire est nécessaire pour la dégradation des polluants désorbés. Des taux d'élimination plus élevés sont atteints pendant le traitement thermique dans des conditions oxydantes mais la structure microporeuse du CA est alors fortement affectée par le procédé, et la capacité d'adsorption en est alors réduite lors de la réutilisation.[6,7]

La régénération chimique par oxydation en utilisant par exemple l'ozone ou la réaction de Fenton limite l'oxydation du CA mais peut également affecter fortement ses caractéristiques chimiques et texturales. De plus, une faible efficacité de régénération est souvent observée pour les CA microporeux et la régénération chimique est ainsi souvent appliquée uniquement aux matériaux mésoporeux ou non poreux.[8-10]

Récemment, le procédé électro-Fenton (EF) est apparu comme une solution prometteuse pour la régénération du CA. L'électro-génération continue de $H_2O_2$ à partir de la réduction à 2 électrons de $O_2$ à la surface du CA combinée à l'apport d'une quantité catalytique de fer (II) régénérée en continu à la cathode permet la formation de radicaux hydroxyles (•OH) (éq 1).[11-13] Une anode en platine (Pt) est utilisée comme contre-électrode.

$$Fe^{2+} + H_2O_2 \rightarrow Fe^{3+} + {}^{.}OH + OH^- \quad (k = 63 \text{ M}^{-1} \text{ s}^{-1}) \tag{1}$$

Il a été observé qu'une large gamme de polluants organiques est complètement minéralisée à l'aide du procédé EF.[11,11,14] Il a également été démontré que les •OH sont capables d'oxyder des composés organiques adsorbés sur du CA en grain et qu'ils participent ainsi à la régénération du CA et à la dégradation des polluants.[15,36] De plus, Bañuelos *et al.* (2015) ont observé que la polarisation cathodique de CA granulaire au cours du procédé EF protège la surface de l'oxydation et peut ainsi éviter l'altération du matériau et la perte de la capacité d'adsorption.[7] Cependant, le développement, l'amélioration et le changement d'échelle du procédé de régénération du CA par EF sont encore entravés par des aspects techniques lors de l'utilisation du CA en tant que cathode[7,15], principalement à cause des chutes ohmiques au sein du lit de CA en grain et d'un manque d'interconnexion au niveau de la microstructure conduisant à une distribution de potentiel très hétérogène dans les lits de CA en grain utilisés comme cathode.

**Invention**

Les fibres poreuses présentent des caractéristiques uniques par rapport au CA en grain ou en poudre[16]. La forme en fibres fines et la structure à pores ouverts réduisent la résistance à la diffusion intra-particulaire des composés organiques depuis la solution vers les sites actifs d'adsorption. Cette forme confère aussi à ce matériau des caractéristiques mécaniques et géométriques adaptées à la conception des réacteurs électrochimiques. Par rapport aux lits de grains de CA, les fibres poreuses de CA permettent d'assurer un meilleur niveau d'interconnexion au niveau de la microstructure et ainsi de réduire les chutes ohmiques ainsi que les zones mortes (zones non-électro-actives). Ainsi, la fibre de CA est un matériau efficace pour l'adsorption de composés organiques et la génération de $H_2O_2$ pendant le traitement de l'eau.[17,18]

Les inventeurs se sont penchés sur une technologie basée sur l'électro-Fenton (EF), en utilisant la fibre de CA comme cathode et une anode recouverte en diamant dopé au bore (DDB), pour à la fois la régénération du CA et la minéralisation des polluants organiques désorbés. La grande surface spécifique, la structure à pores ouverts et la faible résistance à la diffusion intra-particulaire des fibres poreuses de CA ont permis d'atteindre une capacité d'adsorption maximale élevée du phénol (PH) (3,7 mmol g$^{-1}$) et une cinétique d'adsorption rapide. Les fibres poreuses de CA usé/saturé ont ensuite été utilisées comme cathode pendant le procédé EF. Après 6 h de traitement à 300 mA, 70 % de PH a été éliminé de la surface des fibres poreuses de CA. Les inventeurs ont de manière surprenante observé une grande efficacité du procédé attribuée à (i) l'oxydation directe du PH adsorbé par les radicaux hydroxyles générés par la réaction électro-Fenton, (ii) le déplacement continu de l'équilibre d'adsorption dû à l'oxydation des composés organiques dans la solution par réaction électro-Fenton et à la surface de l'anode par oxydation anodique, (iii) l'augmentation locale du pH au niveau de la cathode conduisant à des interactions électrostatiques répulsives, (iv) la surface électro-active élevée et le bon niveau d'interconnexion au niveau de la microstructure provenant de l'utilisation de CA sous forme de fibres, (v) la participation de l'anode en DDB dans la formation d'espèces oxydantes. Il est remarquable que 91 % du PH éliminé du CA a été complètement minéralisé grâce à la réaction électro-Fenton et à l'oxydation anodique, évitant ainsi l'adsorption des sous-produits de dégradation et l'accumulation de composés toxiques tels que la benzoquinone. Les caractéristiques morphologiques et chimiques du CA n'ont pas été affectées en raison de l'effet de la protection par polarisation cathodique. Les fibres poreuses de CA ont été réutilisées avec succès pendant 10 cycles d'adsorption/régénération avec une efficacité de régénération allant de 65 à 78 %, en accord avec la quantité de PH éliminée de la surface des fibres de CA à la fin de chaque cycle de régénération.

Toujours de manière surprenante, les inventeurs ont combiné avec succès le procédé EF avec l'oxydation anodique en utilisant le DDB comme anode. Ceci favorise à la fois l'oxydation des composés adsorbés par oxydation médiée (production d'ozone, de persulfate, du radical sulfate, espèces qui peuvent oxyder les composés à la surface du CA)[13,19] et augmente la minéralisation des polluants désorbés et des sous-produits de dégradation du fait de leur oxydation par les radicaux hydroxyles générés à la surface de l'anode DDB par décharge de l'eau (éq 2 dans laquelle M est le matériau de l'anode).[19]

$$M + H_2O \rightarrow M(^{\cdot}OH) + H^+ + e^- \qquad (2)$$

Les principaux inconvénients des méthodes de régénération conventionnelles sont ainsi évités en utilisant le processus EF selon l'invention. Par comparaison à l'oxydation chimique, une efficacité de régénération beaucoup plus élevée d'un adsorbant microporeux peut être obtenue. Ce processus selon l'invention peut également minéraliser complètement les molécules organiques, tandis que la régénération thermique dans des conditions inertes ne conduit qu'à la désorption des polluants. De plus, la capacité d'adsorption des fibres poreuses de CA n'est pas affectée, contrairement à l'oxydation chimique et aux traitements thermiques en conditions oxydantes. Le choix de l'utilisation de CA sous la forme de fibres joue un rôle crucial sur l'efficacité du procédé car ce matériau présente des caractéristiques appropriées à la fois pour les étapes d'adsorption et de régénération.

## FIGURES

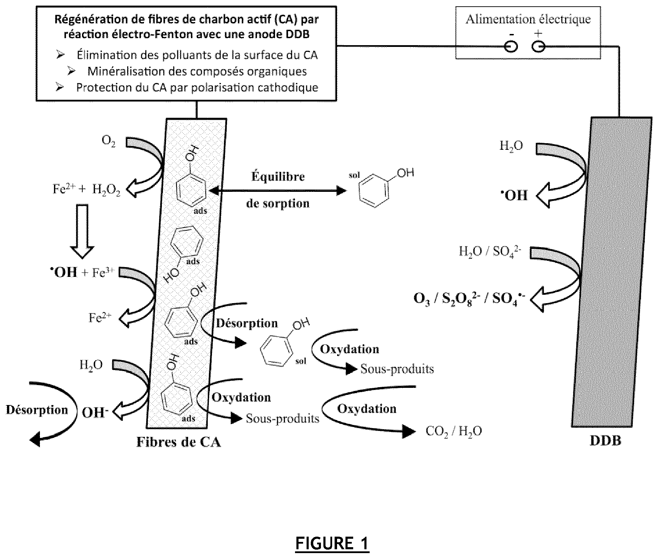

**Figure 1** : Schéma général du dispositif selon l'invention à titre d'exemple

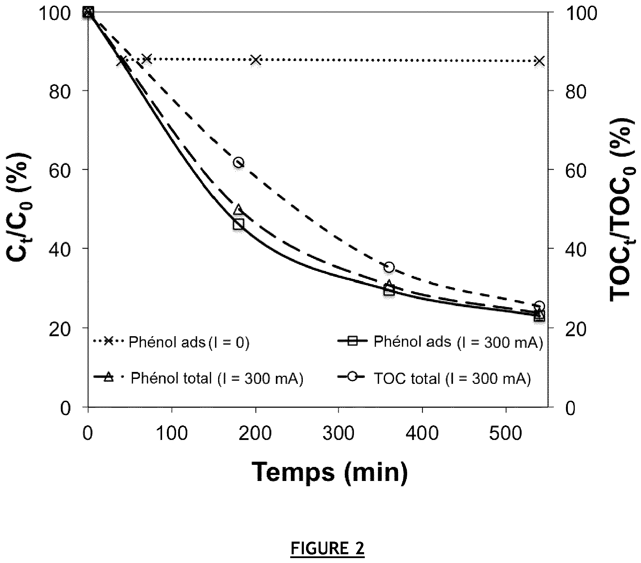

**Figure 2** : Évolution de la concentration de phénol adsorbé sur le tissu de charbon actif (Phenol ads), de phénol dans la solution + adsorbé sur le tissu CA (Phénol total) et de carbone organique total dans la solution + adsorbé sur le tissu CA (TOC total) au cours de la régénération par électro-Fenton du CA chargé en polluant organique. L'expérience de contrôle a été réalisée sans alimentation en courant (I = 0). Les concentrations sont exprimées en pourcentage de la concentration initiale totale ($[PH]_0$ ou $TOC_0$) dans la cellule électrochimique, ce qui correspond à la quantité initiale de phénol adsorbée sur le tissu CA.

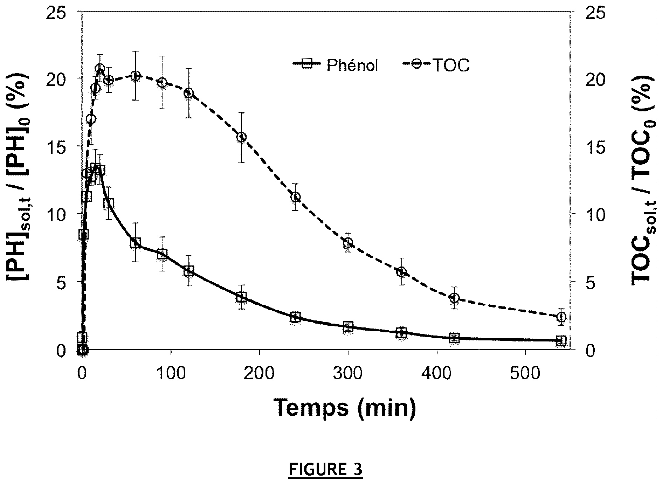

**Figure 3 :** Evolution de la concentration normalisée de phénol et de la concentration normalisée de TOC dans la solution au cours de la régénération par le procédé électro-Fenton du tissu CA chargé en polluants organiques. Les barres d'erreur représentent les écarts-types obtenus à partir d'expériences réalisées en triplicata.

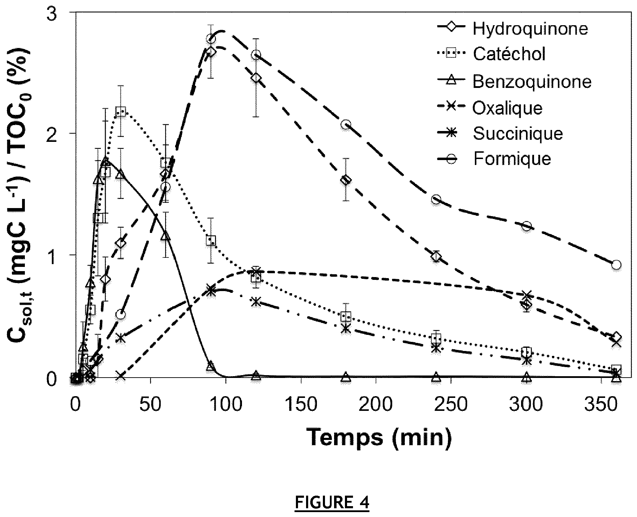

**Figure 4** : Évolution de la concentration dans la solution des principaux sous-produits de la dégradation du phénol ($C_{sol, t}$) lors de la régénération électro-Fenton du tissu CA chargé en polluants organiques. La concentration en composés organiques est calculée en mg de carbone par litre et exprimée en pourcentage de la concentration initiale de carbone organique total ($TOC_0$) dans la cellule électrochimique. Les barres d'erreur représentent les écarts-types obtenus à partir d'expériences réalisées en triplicata.

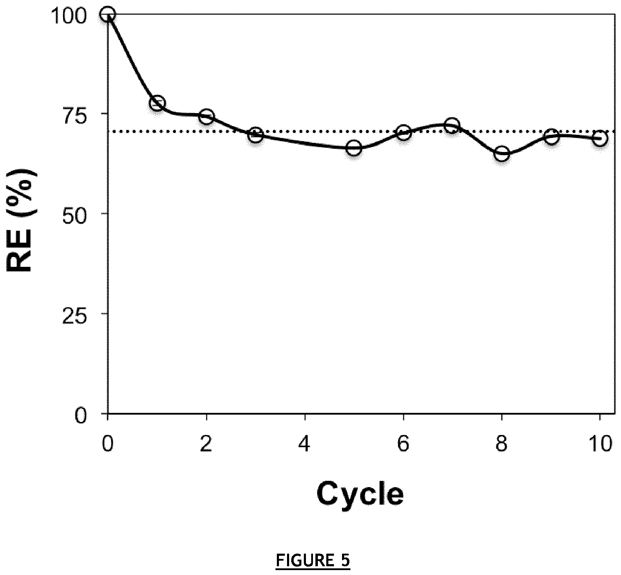

**Figure 5** : Evolution de l'efficacité de régénération (RE) en fonction du nombre de cycles d'adsorption/régénération réalisés. La ligne pointillée correspond au taux d'élimination du phénol adsorbé après 6 h de régénération par électro-Fenton. La barre d'erreur sur le point « cycle 1 » (contenue dans le point de données) représente l'écart-type obtenu à partir d'une expérience réalisée en triplicata.

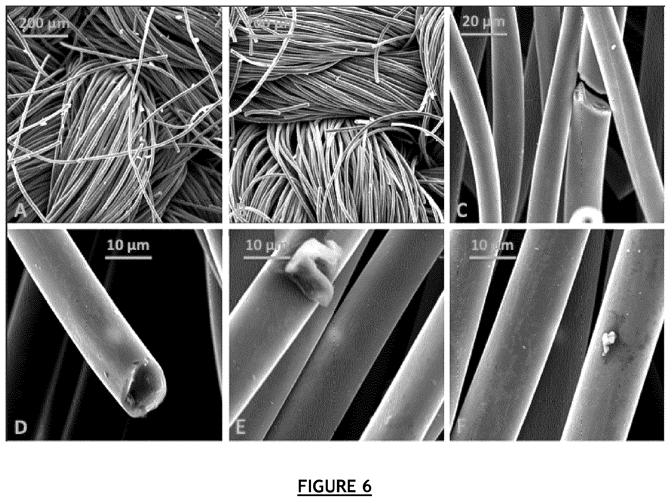

**Figure 6** : Images au microscope électronique à balayage du tissu de charbon actif initial (A, E) et après 10 cycles de régénération (B, F). Les images C et D se concentrent sur la zone de rupture des fibres poreuses observées dans le matériau après 10 cycles de régénération.

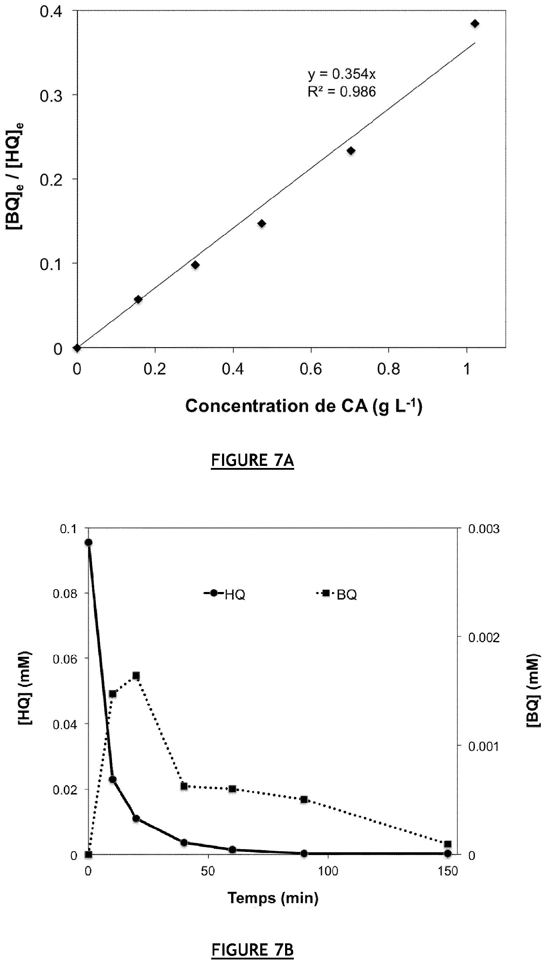

**Figure 7 :** (A) Ratio entre les concentrations à l'équilibre de benzoquinone (BQ) et d'hydroquinone (HQ) après l'adsorption de 0,9 mM d'HQ sur le tissu de charbon actif (CA), en fonction de la concentration de AC ajoutée (B) Evolution des concentrations en HQ et BQ au cours de l'expérience d'adsorption dynamique avec 0,95 mM d'HQ et 2 g L$^{-1}$ de CA.

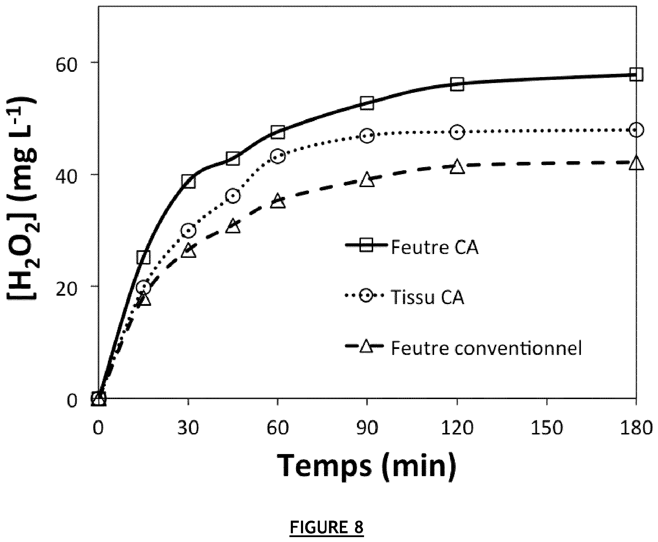

**Figure 8 :** Évolution de la concentration en peroxyde d'hydrogène dans une cellule électrochimique non divisée, en fonction de la cathode utilisée (feutre de charbon actif, tissu de charbon actif ou feutre de carbone conventionnel). Conditions opératoires : V = 125 mL ; [Na$_2$SO$_4$] = 0,1 M ; pH = 3 ; I = 300 mA ; Surface de la cathode = 140 cm$^2$ ; Anode : grille de platine. H$_2$O$_2$ a été analysé par une méthode spectrophotométrique basée sur la formation d'un complexe jaune en présence de Ti$^{4+}$ en milieu acide.

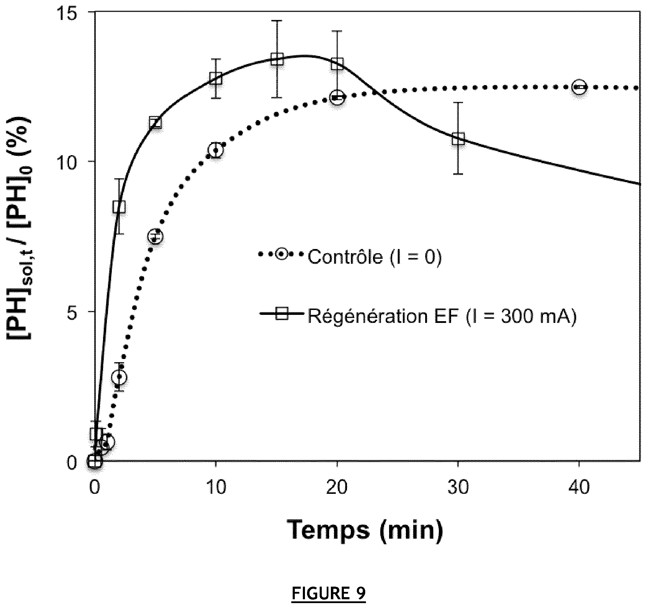

**Figure 9 :** Evolution du rapport entre la concentration en phénol dans la solution ([PH] sol, t) et la concentration initiale adsorbée sur le tissu de charbon actif ([PH] 0 = 6,4 mM) pendant la régénération électro-Fenton (EF) (I = 300 mA) et pendant l'expérience de contrôle sans alimentation en courant. Les barres d'erreur représentent les écarts-types obtenus à partir d'expériences réalisées en triplicata.

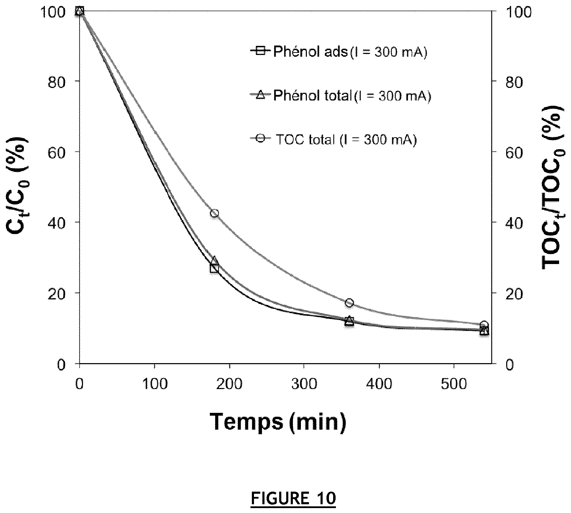

**Figure 10** : Évolution de la concentration de phénol adsorbé sur feutre de charbon actif (CA) (Phenol ads), de phénol dans la solution + adsorbé sur feutre CA (Phénol total) et de carbone organique total dans la solution + adsorbé sur feutre CA (TOC total) lors de la régénération électro-Fenton du CA chargé en polluants organiques. Les concentrations sont exprimées en pourcentage de la concentration initiale totale ([PH]$_0$ ou TOC$_0$) dans la cellule électrochimique, ce qui correspond à la quantité initiale de phénol adsorbée sur le feutre CA.

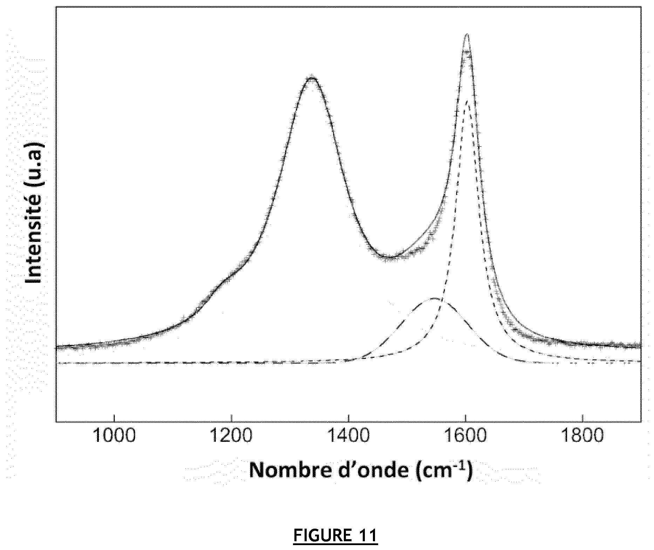

**Figure 11** : Ajustement de la courbe des spectres Raman (tissu CA initial) par combinaison de trois bandes de forme lorentzienne à environ 1 600 cm-1 (G), 1 340 cm-1 (D1) et 1 185 cm-1 (D2) et d'une bande de forme gaussienne à 1 545 cm-1 (D3). Les croix représentent les données expérimentales.

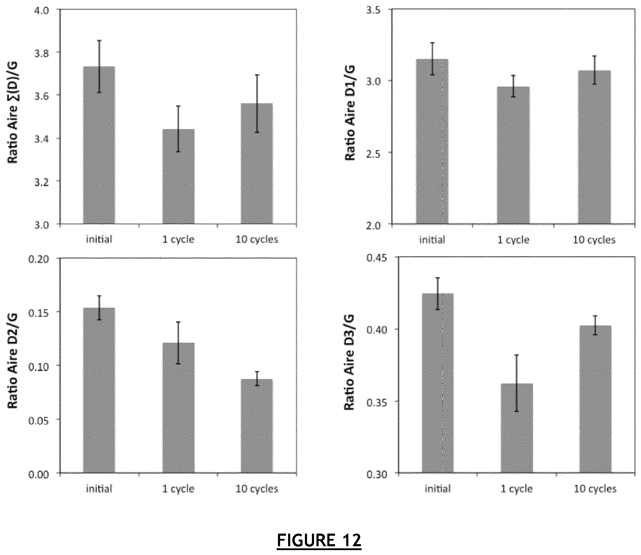

**Figure 12** : Evolution du rapport de surface des bandes Raman D1, D2, D3, D1 + D2 + D3 ($\Sigma$ (D)) et G entre le tissu CA initial et après un et 10 cycles de régénération électro-Fenton. Les barres d'erreur représentent les écarts-types obtenus à partir d'analyses réalisées en triplicata.

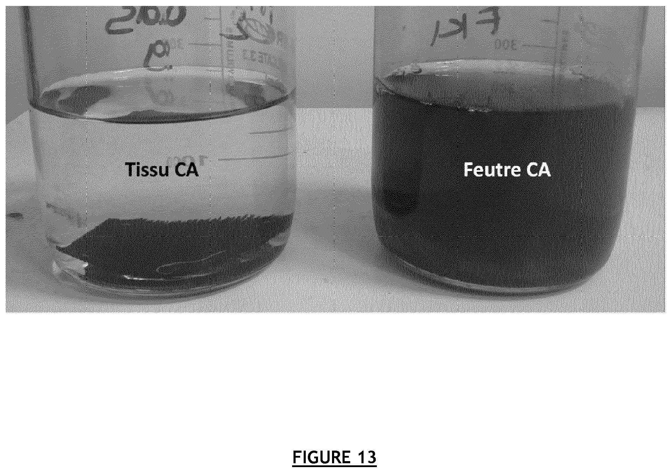

**Figure 13** : Image des solutions obtenues après avoir mélangé pendant 24 h 250 mL de phénol (11 mM) avec 2 g L$^{-1}$ de tissu de charbon régénéré ou de feutre (un cycle). La présence d'une grande quantité de fibres poreuses de charbon actif (CA) cassées est observée lors de l'utilisation de feutre de charbon actif.

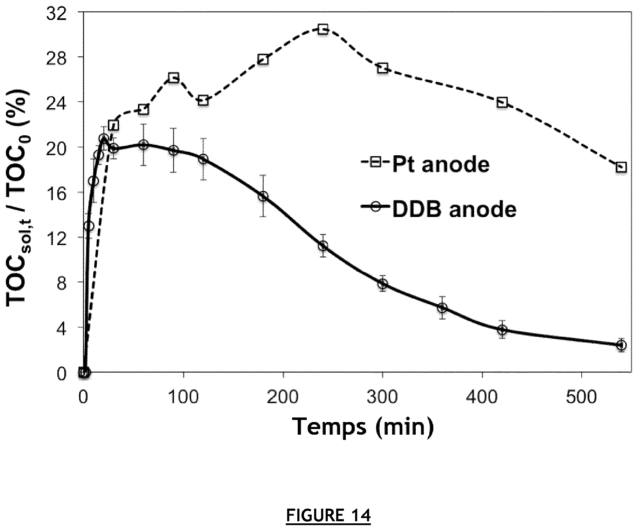

**Figure 14** : Evolution de la concentration normalisée de TOC dans la solution au cours de la régénération par le procédé électro-Fenton du tissu de CA (qui présente les fibres poreuses chargées en phénol). Comparaison de l'utilisation d'une anode de platine par rapport à une anode DDB. Les barres d'erreur représentent les écarts-types obtenus à partir d'expériences réalisées en triplicata dans le cas de l'anode DDB.

## RESUME DE L'INVENTION

Un premier objet de l'invention concerne un dispositif de régénération du charbon actif (CA), comprenant au moins une cellule électrochimique comprenant :

■ au moins une cathode et au moins une anode plongées dans une solution électrolytique :

- avec des fibres poreuses de charbon actif utilisées comme surface électro-active à la cathode et permettant à leur surface la génération de H$_2$O$_2$ pendant la réaction électro-Fenton, fibres poreuses sur lesquelles sont absorbés des polluants organiques et qui ont servi de filtre à polluants organiques ;
- l'anode comprenant un matériau d'anode non-active pour réaliser une oxydation anodique des polluants organiques, le matériau d'anode non active étant défini comme un matériau ayant une surtension au dégagement d'oxygène supérieure à 0,4 V, le matériau d'anode non-active étant du diamant dopé au bore (DDB) ou un oxyde de titane sous-stœchiométrique ;

■ une solution électrolytique avec :

- un apport d'oxygène destiné à être continu lors de la régénération du charbon actif sous forme de fibres poreuses ;
- un apport initial d'ions $Fe^{2+}$ destiné à être continuellement régénéré au cours de la réaction électro-Fenton ;

le dispositif permettant de créer, lors de la réaction électro-Fenton, des espèces oxydantes au niveau de la cathode et de l'anode, les espèces oxydantes créées à l'anode par l'oxydation anodique étant au moins : $\bullet$OH, $O_3$, de préférence : $\bullet$OH, $O_3$, $SO_4^{\bullet-}$ et $S_2O_8^{2-}$ ces espèces oxydantes minéralisant les polluants organiques au niveau de l'anode, de la cathode et de la solution électrolytique.

Dans une réalisation, la surface électro-active de la cathode comprend au moins 90% des fibres poreuses de charbon actif permettant à leur surface la génération de $H_2O_2$.

Dans une autre réalisation, la surface électro-active de la cathode comprend uniquement des fibres poreuses de charbon actif permettant à leur surface la génération de $H_2O_2$.

Avantageusement, le dispositif est un réacteur colonne de filtration en continu d'un écoulement pour lequel les fibres poreuses sont utilisées in-situ dans le réacteur pour à la fois filtrer les polluants de l'écoulement et être régénérées in-situ dans le même réacteur ; il peut être mis en série ou en parallèle plusieurs ensembles de cathode (fibres poreuses de CA) avec anode (DBB ou oxyde de titane sous-stœchiométrique) dans l'écoulement pour pouvoir régénérer la cathode d'un ensemble tout en continuant de filtrer l'écoulement avec les autres ensembles de cathode (fibres poreuses CA) avec anode (DBB ou oxyde de titane sous-stœchiométrique).

Un troisième objet de l'invention concerne l'utilisation d'un filtre composé de fibres poreuses de charbon actif comme surface électro-active cathode pour la réaction électro-Fenton, les fibres poreuses générant à leur surface du $H_2O_2$ pendant la réaction électro-Fenton, dans le dispositif selon l'une des revendications 1 à 14, pour régénérer les fibres poreuses de charbon actif chargées en polluants organiques, ledit filtre ayant été préalablement chargé en polluants organiques par filtration d'eau polluée ou d'air pollué.

## DESCRIPTION DETAILLÉE

L'invention concerne un dispositif de régénération du charbon actif, comprenant au moins une cellule électrochimique comprenant :

■ au moins une cathode et au moins une anode plongées dans une solution électrolytique :

- avec des fibres poreuses de charbon actif utilisées comme surface électro-active à la cathode et permettant à leur surface la génération de $H_2O_2$ pendant la réaction électro-Fenton, fibres poreuses sur lesquelles sont absorbés des polluants organiques et qui ont servi de filtre à polluants organiques ;
- l'anode comprenant un matériau d'anode non-active pour réaliser une oxydation anodique des polluants organiques, le matériau d'anode non active étant défini comme un matériau ayant une surtension au dégagement d'oxygène supérieure à 0,4 V, le matériau d'anode non-active étant du diamant dopé au bore (DDB) ou un oxyde de titane sous-stœchiométrique ;

■ une solution électrolytique avec :

- un apport d'oxygène destiné à être continu lors de la régénération du charbon actif sous forme de fibres poreuses ;
- un apport initial d'ions $Fe^{2+}$ destiné à être continuellement régénéré au cours de la réaction électro-Fenton ;

le dispositif permettant de créer, lors de la réaction électro-Fenton, des espèces oxydantes au niveau de la cathode et de l'anode, les espèces oxydantes créées à l'anode par l'oxydation anodique étant au moins : $\bullet$OH, $O_3$, de préférence : $\bullet$OH, $O_3$, $SO_4^{\bullet-}$ et $S_2O_8^{2-}$ ces espèces oxydantes minéralisant les polluants organiques au niveau de l'anode, de la cathode et de la solution électrolytique.

L'avantage de la réaction EF est de promouvoir simultanément l'oxydation des composés organiques à la fois dans la solution et adsorbés sur le tissu CA.

Le dispositif selon l'invention est particulièrement avantageux car il permet d'atteindre une cinétique de dégradation plus rapide que la cinétique d'adsorption. Ainsi, la réadsorption des sous-produits d'oxydation sur le tissu de CA est évitée. La formation de sous-produits plus hydrophiles ainsi que les interactions électrostatiques dues au pH localement élevé au niveau de la surface du tissu CA contribuent également à empêcher l'adsorption sur le CA des sous-produits de dégradation.

La minéralisation totale des polluants évite l'accumulation de sous-produits toxiques.

La cellule électrochimique présente toute forme permettant de délimiter un contenant approprié aux électrodes et à la solution électrolytique, par exemple cylindrique ou parallélépipédique.

La cellule électrochimique est faite de tout matériau permettant de délimiter un contenant approprié aux électrodes et à la solution électrolytique.

Elle peut être ouverte ou fermée, divisée ou non. De préférence, elle est ouverte et non divisée.

Préférentiellement, le charbon actif sous forme de fibres poreuses ayant servi de filtre à polluants organiques est saturé en polluants organiques.

Les fibres poreuses de charbon actif chargées en polluants organiques servent de cathode. Elles se présentent sous forme de tissu (fibres poreuses ordonnées tissées) ou de feutre (fibres poreuses désordonnées non tissées), de préférence sous forme de tissu. Le tissu est constitué de milliers de fibres poreuses minces présentant une surface spécifique très élevée.

Avantageusement, la cathode est constituée de charbon actif sous forme de fibres poreuses. Elles proviennent d'un ou sont un filtre utilisé préalablement pour filtrer les polluants de l'eau et/ou de l'air.

De préférence, le diamètre des fibres poreuses est supérieur à 0,1 micromètre et inférieur à 1 000 micromètres, de manière encore préférée est supérieur à 1 micromètre et inférieur à 100 micromètres.

La surface spécifique ($S_{BET}$) des fibres poreuses est de préférence supérieure à 100 $m^2.g^{-1}$, de manière encore préférée supérieure à 600 $m^2.g^{-1}$.

Avantageusement, les fibres poreuses présentent une porosité de sorte que plus de 30 % du volume poreux de chacune des fibres poreuses est constitué par des pores de taille inférieure à 2 nm, de manière encore préférée plus de 80 %.

Selon un mode de réalisation, l'anode est constituée d'un matériau d'anode non-active. Selon un autre mode de réalisation, l'anode est constituée d'un substrat recouvert au moins partiellement d'un matériau d'anode non-active.

Selon le modèle proposé par Comninellis[44,45], les matériaux utilisés comme anode en électro-oxydation des polluants organiques en milieu aqueux peuvent être divisées en deux groupes : anodes actives et non-actives.

Dans le cas des anodes actives, le radical hydroxyle (•OH) formé est chimiquement adsorbé et faiblement disponible pour effectuer l'oxydation des composés organiques dans la solution. Ces matériaux favorisent plutôt la réaction de dégagement d'$O_2$.

Dans le cas des anodes non-actives (telle que le DDB), la surtension pour le dégagement d'$O_2$ est plus élevée (comparé aux anodes actives) et les radicaux •OH formés sont physiquement adsorbés. Ils sont dans ce cas plus disponibles et réagissent directement avec les composés organiques.[44,41,11,19]

Le matériau d'anode non active est défini comme un matériau ayant une surtension au dégagement d'oxygène supérieure à 0,4 V, de préférence supérieure à 0.6 V.

De préférence, le matériau d'anode non-active est choisi de façon à ce que les espèces oxydantes créées soient au moins : •OH, $O_3$, de préférence •OH, $O_3$, $SO_4^{•-}$ et $S_2O_8^{2-}$ si des ions sulfates sont présents dans la solution.

Les ions •OH permettent d'attaquer les polluants adsorbés à la cathode jusqu'à leur minéralisation. Avantageusement, la polarisation cathodique préserve cependant la surface des fibres poreuses de charbon actif. La minéralisation totale des polluants évite l'accumulation de sous-produits toxiques.

Le matériau d'anode non-active est du diamant dopé au bore (DDB) ou un oxyde de titane sous-stœchiométrique (propriétés proches du DDB en termes de surtension au dégagement d'oxygène). De manière préférée, le matériau d'anode non-active est du diamant dopé au bore (DDB).

Le dispositif de l'invention peut comprendre plusieurs anodes, en particulier plusieurs anodes en DDB.

A titre d'exemple, le dispositif selon l'invention peut comprendre une anode telle que définie ci-dessus et deux cathodes de part et d'autre de l'anode telles que définies ci-dessus.

Selon un mode de réalisation, l'anode est constituée d'un substrat recouvert au moins partiellement d'un matériau d'anode non-active. De préférence, l'anode est alors constituée d'un substrat recouvert entièrement d'un matériau d'anode non-active. Des substrats appropriés peuvent être cités : Ti, Nb ou Si. L'épaisseur du matériau d'anode non-active sur le substrat varie de 0,1 à 0,5 mm selon la taille globale de l'électrode.

La solution électrochimique présente un apport en oxygène continu pour la production de peroxyde d'hydrogène. L'apport en oxygène est réalisé par une entrée d'oxygène bullé ou d'air bullé dans la solution électrolytique, de préférence par une entrée d'air bullé dans la solution électrolytique. Le bullage participe à l'agitation de la solution électrochimique.

De préférence, l'apport initial d'ions $Fe^{2+}$ présente une concentration catalytique dans la solution électrolytique supérieure à $10^{-5}$ M et inférieure à $10^{-2}$ M, de manière encore préférée comprise entre $3^*10^{-5}$ M et $10^{-3}$ M. L'apport initial en ions $Fe^{2+}$ est avantageusement faible puisque ces ions sont régénérés à la cathode tout au long du procédé (Figure 1).

Les électrodes sont séparées de quelques centimètres, de préférence de moins de 10 cm.

L'électrolyte sera choisi de façon appropriée par l'homme du métier. La présence de sel est nécessaire pour assurer la conductivité de la solution, par exemple, $Na_2SO_4$., Na Cl, etc. La conductivité de la solution est supérieure à 0,01 S m$^{-1}$.

La concentration de l'électrolyte est comprise entre 10$^{-3}$ et 10$^{-1}$ M.

Une agitation de la solution électrochimique est assurée par exemple par agitation magnétique ou mécanique.

Le pH est ajusté, de préférence entre 2 et 5, de manière encore préférée entre 2,6 et 3,6.

La cellule électrochimique est alimentée en courant constant. La densité de courant est de préférence réglée entre 0,1 et 100 mA/cm$^2$, de préférence entre 1 et 30 mA/cm$^2$, de surface de charbon actif dès que la cathode en CA usé/saturé a été immergée dans l'électrolyte.

La densité de courant est déterminée pour optimiser la production de $H_2O_2$ et de •OH et minimiser les réactions secondaires telles que l'évolution de l'oxygène et de l'hydrogène. Un autre objet de l'invention concerne un procédé de régénération de charbon actif chargé en polluants organiques utilisant le dispositif selon l'invention.

Tout type de filtre de charbon actif fabriqué à partir de fibres poreuses de charbon actif pourra être utilisé en tant que cathode du dispositif selon l'invention afin d'être régénéré après son utilisation en tant que filtre des polluants organiques de l'air et/ou de l'eau et pourra ainsi être réutilisé de nouveau en tant que filtre des polluants organiques de l'air et/ou de l'eau. Ce cycle utilisation/régénération peut être répété plusieurs fois.

Un autre objet de l'invention concerne l'utilisation d'un filtre composé de fibres poreuses de charbon actif comme surface électro-active cathode pour la réaction électro-Fenton, les fibres poreuses générant à leur surface du $H_2O_2$ pendant la réaction électro-Fenton, dans le dispositif selon l'une des revendications 1 à 14, pour régénérer les fibres poreuses de charbon actif chargées en polluants organiques, ledit filtre ayant été préalablement chargé en polluants organiques par filtration d'eau polluée ou d'air pollué.

## EXEMPLES

L'étude qui suit vise à évaluer l'efficacité de régénération de la fibre CA pendant le processus EF en utilisant l'anode DDB et la fibre CA chargée en polluant organique comme cathode. En choisissant le phénol (PH) comme polluant organique modèle, les objectifs de cette étude étaient d'évaluer (i) la capacité d'adsorption et la cinétique d'adsorption du PH et des principaux sous-produits d'oxydation aromatique sur les fibres poreuses CA (ii) l'élimination du PH de la surface de la fibre CA chargée en polluant organique par le procédé EF (iii) la libération dans la solution de PH et des sous-produits de dégradation et leur minéralisation subséquente (iv) la capacité d'adsorption et les caractéristiques du matériau régénéré après 1 et 10 cycles d'adsorption/régénération.

## MATERIEL ET METHODES

### 1. Produits chimiques

Tous les produits chimiques sont de qualité réactif achetés chez Acros Organics (PH et sulfate de fer (II) heptahydraté), Sigma Aldrich (hydroquinone (HQ), benzoquinone (BQ), catéchol (CAT), méthanol, sulfate de sodium) ou Fluka (acide sulfurique). Toutes les solutions sont préparées en utilisant de l'eau ultrapure (résistivité> 18,2 MQ cm) à partir d'un système Millipore Milli-Q (Molsheim, France).

### 2. Adsorption

Du tissu de CA microporeux (Dacarb, France), préparé à partir d'une résine phénolique, a été utilisé comme matériau d'adsorption. Des isothermes d'adsorption de N2 ont été réalisées pour la détermination de la surface BET, du volume total des pores et de la distribution de la taille des pores (en utilisant la méthode de la théorie de la fonctionnelle de la densité non locale bidimensionnelle). Les principales caractéristiques du matériau sont présentées dans le tableau 1. Certaines expériences ont également été réalisées en utilisant du feutre de CA préparé à partir de résine phénolique (Dacarb, France) avec différentes caractéristiques morphologiques mais une surface spécifique et une microporosité similaires.

Tableau 1 - Principales caractéristiques du tissu de charbon actif utilisé pendant les expériences

| Poids (g m$^{-2}$) | Epaisseur (mm) | Taille moyenne des pores (nm) | Surface spécifique BET (m$^2$ g$^{-1}$) | volume poreux (cm$^3$ g$^{-1}$) – distribution de la taille des pores | | | | |
|---|---|---|---|---|---|---|---|---|
| | | | | Microporeux (<1 nm) | Microporeux (1-2 nm) | Mesoporeux (2-20 nm) | Macroporeux (>20 nm) | Total |
| 90 | 0,5 | 0,82 | 1306 | 65 % | 33 % | 1,7 % | 0,2 % | 0,54 |

Avant utilisation, le CA a été lavé plusieurs fois dans de l'eau désionisée et séché à 70 °C. Le pH a été fixé à 3 pour toutes les expériences d'adsorption, valeur de pH requise pour l'étape de régénération EF. Des tests de contrôle sans CA ont montré que moins de 3 % de PH a été perdu par volatilisation ou adsorption sur le verre après 24 h.

Des expériences d'adsorption à l'équilibre ont été réalisées à température ambiante (20 °C) avec des composés uniques dans des bouteilles en verre de 500 ml agitées en continu pendant 24 h dans un agitateur rotatif réglé à 20 tr/min. Pour les expériences isothermes, 250 mL de PH (1 mM), BQ (0,5 mM), CAT (0,8 mM) ou HQ (0,9 mM) ont été mélangés avec diverses concentrations de CA de 0,08 à 1 g L-1. Les modèles les plus largement utilisés, Langmuir (éq 3) et Freundlich (éq 4), ont été utilisés pour modéliser les données expérimentales.

$$q_e = \frac{q_m K_L C_e}{1 + K_L C_e} \tag{3}$$

où $q_e$ est la quantité de soluté adsorbée par unité de poids de CA à l'équilibre (mmol g-1), $q_m$ est la capacité d'adsorption maximale (mmol g-1), $K_L$ est une constante liée à l'énergie libre d'adsorption (L mmol-1) et $C_e$ est le concentration de soluté dans la solution mère à l'équilibre (mmol L-1).

$$q_e = K_F C_e^{1/n} \tag{4}$$

où $K_F$ et n sont des constantes liées à la capacité et à l'intensité d'adsorption, respectivement.

Les CA chargés en polluant organique utilisés pour les expériences de régénération EF ont été obtenus en mélangeant 250 mL de PH à 11 mM avec 500 mg de CA (2 g L-1).

Des expériences d'adsorption dynamique ont été réalisées avec des composés uniques et en utilisant une configuration similaire à celle de la régénération électrochimique afin d'assurer les mêmes conditions hydrodynamiques. Les concentrations initiales de CA (2 g L-1) et de composés organiques ([PH] = 1 mM ; [HQ] = [CAT] = 0,1 mM ; [BQ] = 0,05 mM) ont été choisies en fonction des conditions expérimentales observées pendant l'étape de régénération EF. Les données ont été analysées en utilisant à la fois le pseudo-premier ordre (eq 5) et le pseudo-second ordre (eq 6)

$$\ln(q_e - q_t) = \ln q_e - k_1 t \tag{5}$$

où $q_t$ est la quantité de soluté adsorbée par unité de poids de CA à l'instant t et $k_1$ est la constante de vitesse du premier ordre.

$$\frac{t}{q_t} = \frac{1}{k_2 q_e^2} + \frac{t}{q_e} \tag{6}$$

où $k_2$ est la constante de vitesse de second ordre.

*3. Régénération EF des fibres poreuses de CA chargées en polluant organique*

La régénération électrochimique des fibres poreuses de CA chargées en polluant organique a été réalisée en mode discontinu en utilisant une cellule électrochimique ouverte, cylindrique et non divisée, similaire à la configuration précédemment décrite par Trellu *et al.* (2016).[20] 500 mg de CA usé (55 cm$^2$ x 0,5 mm) ont été utilisés comme cathode. L'anode était constituée d'un film mince de DDB déposé sur un substrat de Nb (24 cm$^2$ x 0,2 cm, Condias Gmbh, Itzehoe, Allemagne). Pour comparaison, certaines expériences ont été réalisées avec une grille de Platine comme anode. Les électrodes ont été placées face à face avec un espace de 3 cm entre l'anode et la cathode. La cathode en CA a été fixée dans la cellule électrochimique en utilisant une grille en téflon. L'apport d'oxygène pour la production de peroxyde d'hydrogène a été assuré par un barbotage d'air continu à travers du verre fritté.

0,05 M $Na_2SO_4$ (électrolyte) a été dissout dans de l'eau milli-Q, le pH a été ajusté à 3,0 avec $H_2SO_4$ et 0,1 mM $Fe^{2+}$ (catalyseur) a été ajoutée à la solution.[21] L'agitation continue a été assurée par agitation magnétique et barbotage d'air. L'alimentation en courant constant a été fournie par une alimentation (HAMEG, modèle 7042-5, Allemagne) réglée à 300 mA dès que la cathode CA chargée en polluant organique a été immergée dans l'électrolyte. Ceci correspond à 5,5 ou 12,5 mA cm$^{-2}$ en tant que densité de courant en considérant soit la surface de la cathode de CA, soit la surface de l'anode DDB, respectivement.-La densité de courant a été déterminée pour optimiser la production de $H_2O_2$ et de $\cdot$OH et minimiser les réactions secondaires telles que l'évolution de l'oxygène et de l'hydrogène.

*4. Méthodes analytiques*

Des analyses chimiques ont été effectuées afin de suivre l'évolution de la concentration de PH et des sous-produits de dégradation dans la solution et adsorbés sur les fibres poreuses de CA. Des échantillons aqueux (1 mL) ont été collectés périodiquement à partir de la solution pendant le traitement, tandis que l'analyse des composés organiques adsorbés sur CA a nécessité l'arrêt de l'expérience afin de réaliser une étape de désorption. Les fibres poreuses de CA utilisées comme cathode ont été immergées dans une solution d'éthanol à 90 % - 10 % de NaOH 1M, et a été placée pendant 30 minutes dans un bain d'ultrasons. Après mélange sous agitation magnétique pendant 30 minutes supplémentaires, un aliquot a été recueilli et analysé. Différents auteurs ont observé que de telles conditions éliminent efficacement les composés organiques adsorbés de la surface du CA.[22,23] Des expériences préliminaires ont montré que plus de 97 % du PH adsorbé était désorbé et récupéré après avoir répété deux fois cette procédure.

Le PH et les sous-produits aromatiques ont été analysés par HPLC en phase inverse, tandis que les acides carboxyliques ont été identifiés et quantifiés par chromatographie d'exclusion ionique. Les conditions d'analyse étaient similaires à celles de Pimentel *et al.* (2008).[24] Le taux de minéralisation du PH a été suivi par la mesure du carbone organique total (TOC) avec un analyseur Shimadzu COT-V.

*5. Caractérisation matérielle*

Un microscope électronique à balayage (Phenom XL, PhenomWorld, Pays-Bas) a été utilisé pour analyser la morphologie de surface du tissu de CA. Puisque le CA est conducteur, aucun traitement de surface n'était nécessaire avant l'analyse.

Des mesures Raman ont été effectuées sur un spectromètre Renishaw INVIA équipé d'un microscope et d'un détecteur CCD (LGE, France). Les détails sont donnés ci-dessous (cf. Figures 11 et 12).

<u>Analyse Raman</u>

Un laser vert à 532 nm à l'état solide (Nd : YAG) a été utilisé avec une puissance maximale de 50 mW. Les acquisitions ont été réalisées au moyen d'un objectif de grossissement Leica (x50) après un étalonnage réalisé sur un étalon de silicium. Avec cette configuration, le diamètre du faisceau n'a pas dépassé 2 microns. Le composant de diffusion Rayleigh a été éliminé par un filtre Edge, et la lumière diffusée par Raman a été dispersée par un réseau holographique avec 1 800 lignes mm$^{-1}$. Le temps d'intégration a été fixé à 2 min. Les acquisitions ont été répétées à 3 points différents du matériau. L'analyse spectrale a été réalisée avec le logiciel WIRE.

<u>RESULTATS</u>

*1. Sorption du phénol et des principaux sous-produits d'oxydation aromatique sur les tissus AC*

La première étape de cette étude a consisté à déterminer le comportement d'adsorption du PH et des principaux sous-produits d'oxydation aromatique sur le tissu de CA. Les isothermes d'adsorption de PH, BQ et CAT sont présentées dans le tableau 2. Comme rapporté par les études précédentes, une isotherme d'adsorption classique en L a été obtenue pour tous les composés.[2,25,26] Les équations de Langmuir et de Freundlich sont applicables mais des coefficients de corrélation légèrement supérieurs ont été obtenus en utilisant l'équation de Langmuir pour les trois composés, indiquant que les hypothèses sur lesquelles repose le modèle de Langmuir sont appropriées pour ce matériau (adsorption d'une monocouche de solutés sur une surface adsorbante homogène avec des énergies d'adsorption uniformes). La capacité d'adsorption maximale de PH (3,73 mmol $g^{-1}$) est plus élevée que les résultats précédents rapportés en utilisant du CA granulaire (2,32 mmol $g^{-1}$). Cela est dû à la plus grande surface BET (1 326 vs 929 $m^2 g^{-1}$) ainsi que la structure microporeuse de la fibre de CA puisque l'énergie d'adsorption est améliorée dans les pores de petite taille. En outre, une adsorption efficace nécessite que la taille moyenne des pores (0,82 nm) soit supérieure à 1,2 fois[27] ou 1,7 fois[28] la seconde dimension la plus large de la molécule adsorbée (pour le PH 0,42 nm).[29] Un faible effet d'encombrement stérique est donc attendu dans cette étude parce que ce ratio atteint 2,0.[27-29] Comparativement au PH, les sous-produits d'oxydation aromatique (BQ et CAT) ont présenté une capacité d'adsorption beaucoup plus faible sur les tissus de CA (valeurs de $q_m$ et de $K_F$ plus faibles). Ceci est cohérent avec l'hydrophobicité inférieure des sous-produits hydroxylés, qui ont moins tendance à être adsorbés sur la surface du carbone. L'adsorption physique joue probablement le rôle le plus important pour l'adsorption du PH sur les fibres poreuses de CA, en particulier les interactions $\pi$-$\pi$.[29] Cependant, d'autres facteurs peuvent être impliqués dans les mécanismes d'adsorption, notamment la formation d'un complexe donneur/accepteur d'électron entre le soluté et la surface du CA), des interactions électrostatiques (en fonction du pH de la solution), la taille moléculaire et l'effet du solvant (adsorption compétitive des molécules d'eau).[2,29]

L'étude cinétique montre qu'une grande quantité de PH peut être rapidement adsorbée sur le tissu de CA. De manière similaire à ce qui a été démontré par plusieurs études précédentes, l'étape déterminante dans le processus d'adsorption du PH sur le CA est la diffusion intra-particulaire (relation linéaire entre $q_t$ et $t^{1/2}$).[29,30]

La résistance à la diffusion intra-particulaire est fortement réduite par rapport au CA granulaire en raison de la structure des pores ouverts.[29] Le tissu de CA est constitué de milliers de fibres poreuses minces, ce qui augmente fortement la surface externe. Des coefficients de corrélation bien meilleurs ont été obtenus en utilisant le modèle du pseudo-second ordre par rapport au modèle du pseudo-premier ordre. Un tel comportement est souvent observé pour l'adsorption de composés de faible masse moléculaire sur de petites particules adsorbantes (adsorbant avec une grande surface externe).[31] Les processus d'adsorption obéissent également au modèle du pseudo-second ordre lorsque la concentration initiale de soluté est suffisamment faible.[32] Des expériences ont été effectuées en utilisant des concentrations de PH (1 mM), de CAT (0,1 mM) et de BQ (0,05 mM) correspondant aux concentrations maximales observées pendant l'étape de régénération. Par conséquent, les paramètres cinétiques n'ont pas pu être directement comparés puisque les constantes cinétiques de pseudo-premier ordre et de pseudo-second ordre sont des fonctions complexes de la concentration initiale de soluté.[32] Cependant, Wu *et al.* (2009) [31] ont montré que le paramètre $k_2 q_e$ (éq 6) correspond à l'inverse de la demi-vie du processus d'adsorption et est un paramètre clé pour la comparaison des cinétiques d'adsorption. Ainsi, à partir des valeurs de $k_2 q_e$ observées, on peut conclure que l'adsorption devient plus rapide dans l'ordre suivant : PH> BQ> CAT. La cinétique d'adsorption du PH sur les tissus de CA a été plus lente qu'une étude précédemment rapportée[29], très probablement en raison du diamètre moyen des pores plus faible affectant la diffusion intra-particulaire. L'encombrement stérique peut ne pas affecter la quantité finale de PH adsorbé mais réduire tout de même la cinétique d'adsorption.

Au cours de l'adsorption de HQ sur le tissu de CA, la libération de BQ dans la solution a été observée simultanément ; ensuite, l'adsorption de la BQ a également été observée (figure 7B). Ceci peut s'expliquer par l'oxydation de l'HQ par l'$O_2$ moléculaire lié au graphite.[2] Lors de l'augmentation des concentrations en tissu de CA lors des expériences d'équilibre, une corrélation linéaire a été observée entre le rapport $[BQ]_{eq}/[HQ]_{eq}$ et la concentration de CA (Figure 7A), indiquant que l'oxydation de l'HQ à la surface du CA est régie par un rapport stœchiométrique. De plus, aucune oxydation de l'HQ n'a été observée en l'absence de CA. Ceci confirme que le tissu de CA a agi en tant que médiateur pour l'oxydation de l'HQ en BQ.

Tableau 2 - Paramètres de Langmuir et Freundlich des isothermes d'adsorption et constantes cinétiques du pseudo-premier ordre et du pseudo-second ordre pour l'adsorption du phénol (PH), benzoquinone (BQ) et catéchol (CAT) sur tissu de CA à 25 °C. Les études cinétiques ont été réalisées avec 2 g $L^{-1}$ de tissu de charbon actif et les concentrations initiales suivantes : [PH] = 1,0 mM ; [BQ] = 0,05 mM ; [CAT] = 0,1 mM.

| | | | PH | BQ | CAT |
|---|---|---|---|---|---|
| **Isothermes** | **Langmuir** | $R^2$ | 0,994 | 0,995 | 0,997 |
| | | $q_m$ (mmol $g^{-1}$) | 3,73 | 1,41 | 1,88 |
| | | $K_L$ (L $mmol^{-1}$) | 19,1 | 44,3 | 29,6 |
| | **Freundlich** | $R^2$ | 0,991 | 0,994 | 0,992 |
| | | n | 3,30 | 3,47 | 4,37 |
| | | $K_F$ ((mmol $g^{-1}$)(L $mmol^{-1/n}$)) | 4,24 | 1,97 | 2,14 |

(suite)

| | | | PH | BQ | CAT |
|---|---|---|---|---|---|
| Cinétiques | Pseudo-premier ordre | $R^2$ | 0,911 | 0,943 | 0,982 |
| | | $q_e$ (mmol g$^{-1}$) | 0,31 | 0,016 | 0,042 |
| | | $k_1$ (min$^{-1}$) | 0,089 | 0,092 | 0,066 |
| | Pseudo-second ordre | $R^2$ | 1,00 | 0,999 | 0,999 |
| | | $q_e$ (mmol g$^{-1}$) | 0,62 | 0,026 | 0,054 |
| | | $k_2$ (g mmol$^{-1}$ min$^{-1}$) | 0,78 | 14,0 | 2,65 |
| | | $k_2 q_e$ (min$^{-1}$) | 0,48 | 0,37 | 0,14 |

*2. Élimination du phénol des fibres poreuses de CA et minéralisation des composés organiques pendant la régénération EF*

Les fibres poreuses de CA se présentent sous la forme de tissu. Le tissu de CA chargé de PH a été régénéré en utilisant le procédé EF avec une anode DDB et le tissu de CA chargé de PH comme cathode. Des expériences préliminaires ont montré que le tissu de CA est capable de produire une plus grande quantité de $H_2O_2$ qu'un feutre de carbone conventionnel habituellement utilisé pour le processus EF (Figure 8). Ceci est probablement un effet bénéfique de la structure microporeuse du CA, qui conduit à une plus grande surface électro-active.

Après l'étape d'adsorption, la quantité de phénol adsorbée sur le CA était de 3,2 mmol g$^{-1}$ ; ceci correspond à une concentration dans la cellule électrochimique de 6,4 mM de PH ([PH] 0) et une concentration en TOC de 461 mg L$^{-1}$ (TOC$_0$). Après 6 h de traitement à 300 mA, 70 % du PH adsorbé initial a été éliminé de la surface du tissu de CA (Figure 2). En comparaison, seulement 12,5 % de PH ont été désorbés du tissu de CA pendant l'expérience de contrôle sans courant. Ces 12,5% sont uniquement dû à un processus de désorption conforme à l'équilibre de sorption entre la solution et le CA.

Divers phénomènes peuvent contribuer à l'élimination du PH de la surface du CA. Tout d'abord, il a été observé une augmentation plus importante de la concentration de PH dans la solution pendant les premières minutes d'électro-oxydation à 300 mA, par rapport à l'expérience témoin sans apport de courant (Figure 9). Ceci est attribué à une augmentation locale du pH au voisinage de la cathode due à la réduction de l'eau et la génération d'OH$^-$. En effet, cela conduit à des interactions répulsives entre la forme anionique du PH et la surface du CA. Le procédé de régénération cathodique conventionnel est basé sur ce mécanisme[33]. Malheureusement, la désorption induite par le pH n'est souvent pas suffisante pour atteindre une efficacité de régénération élevée des CA saturés, en particulier en cas de sorption chimique (irréversible) des polluants.[34,35] L'avantage du procédé EF est de promouvoir simultanément l'oxydation des composés organiques à la fois dans la solution et adsorbés sur le tissu de CA.

Les composés organiques adsorbés peuvent réagir directement avec des espèces oxydantes telles que les •OH du procédé EF et les réactifs redox électrochimiquement générés ($H_2O_2$, $O_3$, persulfate, radical sulfate). En procédant à l'oxydation classique de Fenton, il a été reporté une très faible efficacité de régénération de CA microporeux en raison de la disponibilité limitée des molécules adsorbées dans les micropores envers les espèces oxydantes.[8] Au cours du procédé EF, $H_2O_2$ est généré à la surface des pores de CA, par conséquent, les •OH peuvent être produit à proximité des polluants cibles adsorbés sur la surface du CA selon la réaction de Fenton électrochimiquement supportée (éq 1). Cela augmente la disponibilité des polluants adsorbés pour l'oxydation. Ainsi, une meilleure efficacité de régénération du CA microporeux peut être obtenue par EF par rapport à l'oxydation classique de Fenton. De plus, la faible résistance à la diffusion intra-particulaire des fibres poreuses de CA favorise la diffusion des espèces oxydantes dans la microporosité du CA, améliorant ainsi la disponibilité des composés adsorbés envers les espèces oxydantes. En outre, une vitesse de dégradation élevée du PH dans la solution implique un déplacement de l'équilibre de sorption et la libération continue de PH du tissu de CA vers la solution.

Des expériences similaires ont également été réalisées en utilisant des fibres poreuses de CA sous la forme de feutre de CA au lieu du tissu de CA (Figure 10). Un taux d'élimination plus élevé du PH adsorbé (88 % après 9 h) a été observé en utilisant du feutre de CA pendant la régénération EF. Cela pourrait être attribué à une résistance à la diffusion intra-particulaire plus faible, ce qui favorise la cinétique de désorption et la diffusion des espèces oxydantes dans la microporosité du CA. Cependant, ce matériau présente des propriétés mécaniques moins adaptées au traitement de l'eau.

Que ce soit en utilisant le feutre ou le tissu de CA, le PH a été principalement éliminé de la cathode pendant les 3 premières heures, puis l'efficacité du procédé a fortement diminué. Cela pourrait être lié à la présence de polluants physisorbés et chimisorbés et à l'élimination plus lente du PH chimisorbé. De plus, une plus faible disponibilité (vis-à-vis des espèces oxydantes) des molécules de PH adsorbées dans les plus petits pores des fibres poreuses de CA pourrait également réduire l'efficacité après les 3 premières heures de traitement.

Le grand avantage de ce procédé est d'éviter l'accumulation de composés organiques dans la solution. Seulement 6 % du TOC adsorbé initial se retrouve dans la solution après 6 h de traitement (Figure 3). Cela signifie que 91 % des 70 % de PH retirés du tissu de CA ont été complètement minéralisés en $CO_2$ et $H_2O$. La concentration de PH et de TOC dans la solution augmente rapidement au cours des 20 premières minutes en raison de la désorption rapide d'une partie du PH adsorbé. Ensuite, l'évolution de la concentration de PH et de TOC dépend de : (i) la cinétique de désorption et de dégradation du PH adsorbé sur le CA, (ii) la cinétique de dégradation du PH dans la solution et le déplacement de l'équilibre d'adsorption conduisant à la désorption du PH et iii) la cinétique de minéralisation des sous-produits d'oxydation dans la solution. Une accumulation plus élevée du TOC a été observée dans la solution, par comparaison à la concentration en PH. En effet, le TOC dans la solution provient à la fois de la désorption du PH et de la libération des sous-produits d'oxydation du PH adsorbé et dissous. Cependant, une diminution rapide du TOC dans la solution a été observée en raison du taux de production élevé de •OH à la fois dans la solution (éq 1) et à la surface de l'anode DDB (éq 2). En outre, aucun sous-produit de dégradation n'a été détecté comme adsorbé sur le tissu de CA au cours du traitement. Le procédé permet d'atteindre une cinétique de dégradation plus rapide que la cinétique d'adsorption. Ainsi, la ré-adsorption des sous-produits d'oxydation sur le tissu de CA est évitée. La formation de sous-produits plus hydrophiles, l'occupation des sites d'adsorption par le PH résiduel et les molécules d'eau ainsi que les interactions électrostatiques dues au pH localement élevé à la surface du tissu de CA contribuent également à empêcher l'adsorption des sous-produits de dégradation.

La minéralisation totale des polluants évite l'accumulation de sous-produits toxiques tels que la BQ (Figure 4). Les autres intermédiaires aromatiques identifiés ont été principalement le CAT et l'HQ. Le résorcinol n'a été détecté qu'en très faible quantité puisque l'hydroxylation du phénol est principalement favorisée dans les positions para (HQ) et ortho (CAT).[37] Le CAT a atteint rapidement sa concentration maximale à t = 30 min (2,2 % de $TOC_0$) parce que son taux de production à partir de l'oxydation du PH est la plus élevée au début de l'expérience et diminue ensuite continuellement en raison de la plus faible concentration de PH. La concentration de BQ a aussi atteint rapidement son maximum à t = 20 min (1,8 % de $TOC_0$) puis diminue rapidement en dessous de la limite de détection à t = 120 min. Par comparaison, la concentration d'HQ a atteint son maximum plus tard (t = 90 min, 2,8 % de $TOC_0$) et a diminué beaucoup plus lentement. Pimentel *et al.* (2008) ont observé un comportement similaire lors de l'élimination du PH par EF avec une cathode en carbone conventionel.[24] Comme suggéré dans la littérature, ceci pourrait s'expliquer en prenant en compte l'équilibre du couple redox HQ/BQ (E° = 0,70 V) et la réduction possible de la BQ en HQ.[37,38] De plus, Mousset *et al.* (2016) ont rapporté que les constantes cinétiques de dégradation de l'oxydation de la BQ en acides muconiques et maléiques est d'environ un ordre de magnitude supérieure à celles de l'oxydation de l'HQ en les mêmes sous-produits de dégradation.[37] Les sous-produits aromatiques subissent des réactions d'ouverture du cycle aromatique pour former des acides carboxyliques à chaîne courte.[11] Les acides succinique, oxalique et formique ont été les principaux acides carboxyliques à chaîne courte détectés et ont atteint leur concentration maximale à 90, 120 et 90 min d'électrolyse, respectivement. L'évolution des concentrations des sous-produits d'oxydation dans la solution dépend (i) de la quantité générée par la dégradation du PH dans la solution ou adsorbée sur le tissu de CA et (ii) de la cinétique de dégradation dans la solution et à la surface de l'anode. Ainsi, la concentration des acides carboxyliques à chaîne courte a diminué plus lentement que celle des sous-produits aromatiques en raison de leur cinétique de réaction plus lente avec les •OH.[37,39] Il a été montré que l'utilisation d'une anode non-active telle que le DDB joue un rôle important dans l'efficacité de la minéralisation des polluants désorbés. En utilisant une anode de platine avec les fibres poreuses de CA à la cathode, l'augmentation du TOC dans la solution au début de la régénération est plus importante, puis la diminution du TOC est bien plus lente qu'en utilisant une anode de DDB (Figure 14). Après 9 h de traitement en utilisant une anode de platine, 18% du TOC initialement adsorbé se trouve dans la solution, contre seulement 2% en utilisant une anode DDB. En effet, le platine est une anode active, avec une faible surtension au dégagement d'oxygène, qui ne permet pas la formation d'espèces oxydantes puissantes, contrairement à l'anode DDB pour laquelle une synergie avec l'utilisation des fibres poreuses de CA à la cathode est observée. De plus, dans le cas de l'utilisation des phénomènes d'électropolymérisation des composés phénolés sont observés, menant ainsi à une passivation et à un colmatage de l'anode de platine. Par ailleurs, une anode en oxyde de titane sous-stœchiométrique pourrait être aussi utilisée à la place du DDB avec une efficacité similaire, puisque ces deux matériaux sont des anodes non-actives, c'est-à-dire qu'elles présentent comme caractéristique d'avoir une forte surtension au dégagement d'$O_2$, ce qui permet la formation d'espèces oxydantes puissantes (radical hydroxyles, ozone, persulfate, radical sulfate).

*3. Réutilisation de la fibre de CA régénérée*

Des expériences supplémentaires ont été réalisées afin d'évaluer le potentiel de cette technologie pour la réutilisation du CA régénéré. Les fibres poreuses de CA sous la forme de tissu de CA ont été choisies comme le matériau le plus prometteur, car le feutre de CA a présenté des propriétés mécaniques insuffisantes pour le traitement de l'eau. Plusieurs cycles d'adsorption suivis de régénération EF ont été mis en œuvre afin de suivre l'évolution de l'efficacité du procédé de régénération (Figure 5). Par ailleurs, la texture morphologique et la structure chimique de la surface du CA ont été caractérisées après un et dix cycles d'adsorption/régénération. Le temps de régénération optimal par EF a été fixé à 6 h car l'efficacité du procédé diminue entre 6 et 9 h de traitement.

L'efficacité de régénération (RE) a été calculée en comparant la quantité de PH qui peut être adsorbée sur le CA régénéré ($q_{reg}$) et la quantité de PH adsorbée sur le CA initial ($q_i$) (éq 7)

$$RE(\%) = \frac{q_{reg}}{q_i} \times 100 \qquad (7)$$

RE était de 78 % après un cycle, alors que seulement 70 % du PH adsorbé était éliminé de la surface du CA après 6 h de traitement. Ainsi, en tenant compte à la fois du PH résiduel (30 % de la capacité d'adsorption initiale du CA) et du nouveau PH adsorbé sur le CA (78 %) après le premier cycle de régénération, la capacité d'adsorption du CA régénéré est supérieure à celle du matériau initial.

Des analyses Raman ont été réalisées afin d'évaluer l'évolution de la composition chimique du tissu de CA. Les spectres ont été analysés en utilisant la procédure de déconvolution suivante : une combinaison de trois bandes de forme lorentzienne à environ 1 600 cm$^{-1}$ (G), 1 340 cm$^{-1}$ (D1) et 1 185 cm$^{-1}$ (D2) et une bande de forme gaussienne à 1 545 cm-1 (D3) a été utilisée (un exemple est donné à la figure 11). Ces bandes correspondent à différents modes de vibration. Dans l'ensemble, les résultats montrent que la composition chimique du tissu de CA n'est pas fortement modifiée après 10 cycles d'adsorption/régénération EF (Figure 12). Cependant, une légère diminution de 8 % du rapport entre l'intensité intégrée de la somme des bandes D et la bande G (IΣD / IG) a été observée après un cycle de régénération. Une diminution plus importante du rapport ID2/IG (21 %) et ID3/IG (15 %) a été observée par rapport à IDI/IG (6 %). Les bandes D1, D2 et D3 sont décrites comme caractéristiques des bords des couches de graphène, des impuretés ioniques et du carbone amorphe, respectivement[40,41]. Ces résultats indiquent donc que la plus grande capacité d'adsorption du CA régénéré (après 1 cycle) pourrait être attribuée à un effet de nettoyage de la surface du CA par le processus EF. Certaines impuretés du tissu de CA vierge sont éliminées pendant la première régénération EF.

Une légère diminution de RE a été observée au cours des cycles 2 (74 %) et 3 (70 %). Ensuite, RE a atteint un plateau, avec une légère variation entre 65 % et 72 %. Le RE élevé obtenu tout au long des 10 cycles de régénération démontre la pertinence de cette stratégie de traitement. La polarisation cathodique évite d'endommager la surface du CA. Alors que les analyses Raman ont montré un effet nettoyant du tissu de CA, la comparaison des images SEM montre l'absence de tout changement dans la texture morphologique du tissu de CA entre les échantillons initiaux et régénérés (10 cycles) (Figure 6). Le tissu de CA est constitué de milliers de fibres poreuses d'un diamètre d'environ 10 μm étroitement entrelacées. Les tissus de CA initiaux et régénérés contiennent dans les deux cas des fibres poreuses cassées. La texture morphologique des fibres poreuses est très similaire dans les deux échantillons, même au voisinage du point de rupture d'une fibre. Puisque la régénération EF n'affecte pas la structure morphologique et chimique du tissu de CA, la rupture de fibres poreuses ne semble provenir que de contraintes mécaniques. En utilisant du tissu de CA, la libération de fibres dans l'eau n'était pas visible et n'était pas détectable par analyse TOC. Par contre, en utilisant le feutre de CA, les conditions d'agitation pendant l'étape d'adsorption ont conduit à la libération dans l'eau de grandes quantités de petites fibres poreuses (Figure 13). C'est pourquoi le tissu de CA semble être plus approprié que le feutre de CA pour ce type d'application[42, 43].

REFERENCES

(1) Gupta, V. K.; Suhas. Application of low-cost adsorbents for dye removal - A review. J. Environ. Manage. 2009, 90 (8), 2313-2342.

(2) Dabrowski, A.; Podkoscielny, P.; Hubicki, Z.; Barczak, M. Adsorption of phenolic compounds by activated carbon- a critical review. Chemosphere 2005, 58 (8), 1049-1070.

(3) Moreno-Castilla, C. Adsorption of organic molecules from aqueous solutions on carbon materials. Carbon 2004, 42 (1), 83-94.

(4) Biniak, S.; Szymanski, G.; Siedlewski, J.; Swiatkowski, A. The characterization of activated carbons with oxygen and nitrogen surface groups. Carbon 1997, 35 (12), 1799-1810.

(5) Kannan, N.; Sundaram, M. M. Kinetics and mechanism of removal of methylene blue by adsorption on various carbons-a comparative study. Dyes Pigments 2001, 51 (1), 25-40.

(6) Alvarez, P. M.; Beltran, F. J.; Gomez-Serrano, V.; Jaramillo, J.; Rodriguez, E. M. Comparison between thermal and ozone regenerations of spent activated carbon exhausted with phenol. Water Res. 2004, 38 (8), 2155-2165.

(7) Banuelos, J. A.; Garcia-Rodriguez, O.; Rodriguez-Valadez, F. J.; Manriquez, J.; Bustos, E.; Rodriguez, A.; Godinez, L. A. Cathodic polarization effect on the electro-Fenton regeneration of activated carbon. J. Appl. Electrochem. 2015, 45 (5), 523-531.

(8) Xiao, Y.; Hill, J. M. Impact of Pore Size on Fenton Oxidation of Methyl Orange Adsorbed on Magnetic Carbon Materials: Trade-Off between Capacity and Regenerability. Environ. Sci. Technol. 2017, 51 (8), 4567-4575.

(9) Brown, N. W.; Roberts, E. P. L.; Chasiotis, A.; Cherdron, T.; Sanghrajka, N. Atrazine removal using adsorption and electrochemical regeneration. Water Res. 2004, 38 (13), 3067-3074.

(10) Hussain, S. N.; Asghar, H. M. A.; Campen, A. K.; Brown, N. W.; Roberts, E. P. L. Breakdown products formed due to oxidation of adsorbed phenol by electrochemical regeneration of a graphite adsorbent. Electrochimica Acta 2013, 110, 550-559.

(11) Brillas, E.; Sirés, I.; Oturan, M. A. Electro-Fenton process and related electrochemical technologies based on Fenton's reaction chemistry. Chem. Rev. 2009, 109 (12), 6570-6631.

(12) Sirés, I.; Brillas, E.; Oturan, M. A.; Rodrigo, M. A.; Panizza, M. Electrochemical advanced oxidation processes: today and tomorrow. A review. Environ. Sci. Pollut. Res. 2014, 21 (14), 8336-8367.

(13) Martinez-Huitle, C. A.; Rodrigo, M. A.; Sirés, I.; Scialdone, O. Single and Coupled Electrochemical Processes and Reactors for the Abatement of Organic Water Pollutants: A Critical Review. Chem. Rev. 2015, 115 (24), 13362-13407.

(14) Oturan, N.; van Hullebusch, E. D.; Zhang, H.; Mazeas, L.; Budzinski, H.; Le Menach, K.; Oturan, M. A. Occurrence and Removal of Organic Micropollutants in Landfill Leachates Treated by Electrochemical Advanced Oxidation Processes. Environ. Sci. Technol. 2015, 49 (20), 12187-12196.

(15) Bañuelos, J. A.; Rodríguez, F. J.; Manríquez Rocha, J.; Bustos, E.; Rodríguez, A.; Cruz, J. C.; Arriaga, L. G.; Godínez, L. A. Novel electro-Fenton approach for regeneration of activated carbon. Environ. Sci. Technol. 2013, 47 (14), 7927-7933.

(16) Suzuki, M. Activated carbon fiber: Fundamentals and applications. Carbon 1994, 32 (4), 577-586.

(17) Brasquet, C.; Roussy, J.; Subrenat, E.; Cloirec, P. L. Adsorption and Selectivity of Activated Carbon Fibers Application to Organics. Environ. Technol. 1996, 17 (11), 1245-1252.

(18) Brasquet, C.; Le Cloirec, P. Adsorption onto activated carbon fibers: Application to water and air treatments. Carbon 1997, 35 (9), 1307-1313.

(19) Panizza, M.; Cerisola, G. Direct and mediated anodic oxidation of organic pollutants. Chem. Rev. 2009, 109 (12), 6541-6569.

(20) Trellu, C.; Ganzenko, O.; Papirio, S.; Pechaud, Y.; Oturan, N.; Huguenot, D.; van Hullebusch, E. D.; Esposito, G.; Oturan, M. A. Combination of anodic oxidation and biological treatment for the removal of phenanthrene and Tween 80 from soil washing solution. Chem. Eng. J. 2016, 306, 588-596.

(21) Özcan, A.; Sahin, Y.; Koparal, A. S.; Oturan, M. A. A comparative study on the efficiency of electro-Fenton process in the removal of propham from water. Appl. Catal. B-Environ. 2009, 89 (3-4), 620-626.

(22) Rodrigues, L. A.; Ribeiro, L. A. de S.; Thim, G. P.; Ferreira, R. R.; Alvarez-Mendez, M. O.; Coutinho, A. dos R. Activated carbon derived from macadamia nut shells: an effective adsorbent for phenol removal. J. Porous Mater. 2013, 20 (4), 619-627.

(23) Hamdaoui, O.; Naffrechoux, E.; Suptil, J.; Fachinger, C. Ultrasonic desorption of p-chlorophenol from granular activated carbon. Chem. Eng. J. 2005, 106 (2), 153-161.

(24) Pimentel, M.; Oturan, N.; Dezotti, M.; Oturan, M. A. Phenol degradation by advanced electrochemical oxidation process electro-Fenton using a carbon felt cathode. Appl. Catal. B-Environ. 2008, 83 (1-2), 140-149.

(25) Hamdaoui, O.; Naffrechoux, E. Modeling of adsorption isotherms of phenol and chlorophenols onto granular activated carbon: Part I. Two-parameter models and equations allowing determination of thermodynamic parameters. J. Hazard. Mater. 2007, 147 (1-2), 381-394.

(26) Giles, C. H.; MacEwan, T. H.; Nakhwa, S. N.; Smith, D. 786. Studies in adsorption. Part XI. A system of classification of solution adsorption isotherms, and its use in diagnosis of adsorption mechanisms and in measurement of specific surface areas of solids. J. Chem. Soc. Resumed 1960, No. 0, 3973-3993.

(27) Pelekani, C.; Snoeyink, V. L. Competitive adsorption between atrazine and methylene blue on activated carbon: the importance of pore size distribution. Carbon 2000, 38 (10), 1423-1436.

(28) Kasaoka, S.; Sakata, Y.; Tanaka, E.; Naitoh, R. Design of molecular-sieve carbon. Studies on the adsorption of various dyes in the liquid phase. Int. Chem. Eng. 1989, 1987 (29), 734-742.

(29) Liu, Q.-S.; Zheng, T.; Wang, P.; Jiang, J.-P.; Li, N. Adsorption isotherm, kinetic and mechanism studies of some substituted phenols on activated carbon fibers. Chem. Eng. J. 2010, 157 (2-3), 348-356.

(30) Moon, H.; Kook Lee, W. Intraparticle diffusion in liquid-phase adsorption of phenols with activated carbon in finite batch adsorber. J. Colloid Interface Sci. 1983, 96 (1), 162-171.

(31) Wu, F.-C.; Tseng, R.-L.; Huang, S.-C.; Juang, R.-S. Characteristics of pseudo-second-order kinetic model for liquid-phase adsorption: A mini-review. Chem. Eng. J. 2009, 151 (1-3), 1-9.

(32) Azizian, S. Kinetic models of sorption: A theoretical analysis. J. Colloid Interface Sci. 2004, 276 (1), 47-52.

(33) Ania, C. O.; Béguin, F. Electrochemical regeneration of activated carbon cloth exhausted with bentazone. Environ. Sci. Technol. 2008, 42 (12), 4500-4506.

(34) Narbaitz, R. M.; McEwen, J. Electrochemical regeneration of field spent GAC from two water treatment plants. Water Res. 2012, 46 (15), 4852-4860.

(35) Zhan, J.; Wang, Y.; Wang, H.; Shen, W.; Pan, X.; Wang, J.; Yu, G. Electro-peroxone regeneration of phenol-saturated activated carbon fiber: The effects of irreversible adsorption and operational parameters. Carbon 2016, 109, 321-330.

(36) Trellu, C.; Péchaud, Y.; Oturan, N.; Mousset, E.; Huguenot, D.; Hullebusch, E. D. van; Esposito, G.; Oturan, M. A. Comparative study on the removal of humic acids from drinking water by anodic oxidation and electro-Fenton processes: Mineralization efficiency and modelling. Appl. Catal. B Environ. 2016, 194, 32-41.

(37) Mousset, E.; Frunzo, L.; Esposito, G.; van Hullebusch, E. D.; Oturan, N.; Oturan, M. A. A complete phenol oxidation pathway obtained during electro-Fenton treatment and validated by a kinetic model study. Appl. Catal. B-Environ. 2016, 180, 189-198.

(38) Bailey, S. I.; Ritchie, I. M.; Hewgill, F. R. The construction and use of potential-pH diagrams in organic oxidation-reduction reactions. J. Chem. Soc. Perkin Trans. 2 1983, No. 5, 645-652.

(39) Oturan, M. A.; Pimentel, M.; Oturan, N.; Sirés, I. Reaction sequence for the mineralization of the short-chain carboxylic acids usually formed upon cleavage of aromatics during electrochemical Fenton treatment. Electrochimica Acta 2008, 54 (2), 173-182.

(40) Sadezky, A.; Muckenhuber, H.; Grothe, H.; Niessner, R.; Pöschl, U. Raman microspectroscopy of soot and related carbonaceous materials: Spectral analysis and structural information. Carbon 2005, 43 (8), 1731-1742.

(41) Cuesta, A.; Dhamelincourt, P.; Laureyns, J.; Martínez-Alonso, A.; Tascón, J. M. D. Raman microprobe studies on carbon materials. Carbon 1994, 32 (8), 1523-1532.

(42) Garcia-Segura, S.; Brillas, E. Mineralization of the recalcitrant oxalic and oxamic acids by electrochemical advanced oxidation processes using a boron-doped diamond anode. Water Res. 2011, 45 (9), 2975-2984.

(43) Radjenovic, J.; Sedlak, D. L. Challenges and Opportunities for Electrochemical Processes as Next-Generation Technologies for the Treatment of Contaminated Water. Environ. Sci. Technol. 2015, 49 (19), 11292-11302.

(44) Comninellis, C. Electrocatalysis in the electrochemical conversion/combustion of organic pollutants for waste water treatment. Electrochim. Acta 1994, 39, 1857.

(45) Comninellis, C., Kapalka, A., Malato, S., Parsons, S.A., Poulios, I., Mantzavinos, D., 2008. Advanced oxidation processes for water treatment: Advances and trends for R&D. J. Chem. Technol. Biotechnol. 83, 769-776. https://doi.org/10.1002/jctb.1873.

## Revendications

1. Dispositif de régénération du charbon actif, comprenant au moins une cellule électrochimique comprenant :

   ■ au moins une cathode et au moins une anode plongées dans une solution électrolytique :

   - avec des fibres poreuses de charbon actif utilisées comme surface électro-active à la cathode et permettant à leur surface la génération de $H_2O_2$ pendant la réaction électro-Fenton, fibres poreuses sur lesquelles sont adsorbés des polluants organiques et qui ont servi de filtre à polluants organiques ;
   - l'anode comprenant un matériau d'anode non-active pour réaliser une oxydation anodique des polluants organiques, le matériau d'anode non active étant défini comme un matériau ayant une surtension au dégagement d'oxygène supérieure à 0.4 V, le matériau d'anode non-active étant du diamant dopé au bore (DDB) ou un oxyde de titane sous-stœchiométrique ;

   ■ une solution électrolytique avec :

   - un apport d'oxygène destiné à être continu lors de la régénération du charbon actif sous la forme de fibres poreuses ;
   - un apport initial d'ions $Fe^{2+}$ destiné à être continuellement régénéré au cours de la réaction électro-Fenton ;

   le dispositif permettant de créer, lors de la réaction électro-Fenton, des espèces oxydantes au niveau de la cathode et au niveau de l'anode, les espèces oxydantes créées à l'anode par l'oxydation anodique étant au moins : •OH, $O_3$, de préférence : •OH, $O_3$, $SO_4^{•-}$ et $S_2O_8^{2-}$, ces espèces oxydantes minéralisant les polluants organiques au niveau de l'anode, de la cathode et de la solution électrolytique.

2. Dispositif selon la revendication 1, dans lequel la surface électro-active de la cathode comprend au moins 90 % des fibres poreuses de charbon actif.

3. Dispositif selon la revendication 1 ou 2, dans lequel la surface électro-active de la cathode comprend uniquement des fibres poreuses de charbon actif.

4. Dispositif selon l'une quelconque des revendications 1 à 3, dans lequel les fibres poreuses de charbon actif se présentent sous forme de tissu.

5. Dispositif selon l'une quelconque des revendications 1 à 3, dans lequel les fibres poreuses de charbon actif se présentent sous forme de feutre.

6. Dispositif selon l'une quelconque des revendications 1 à 5, dans lequel le charbon actif sous forme de fibres poreuses ayant servi de filtre à polluants organiques est saturé en polluants organiques.

7. Dispositif selon l'une quelconque des revendications 1 à 6, dans lequel l'apport initial d'ions Fe2+ présente une concentration catalytique dans la solution électrolytique supérieure à $10^{-5}$ M et inférieure à $10^{-2}$ M.

8.  Dispositif selon l'une quelconque des revendications 1 à 7, dans lequel les polluants organiques adsorbés sur les fibres poreuses de la cathode comprennent des composés phénolés.

9.  Dispositif selon l'une quelconque des revendications 1 à 8, dans lequel le pH est ajusté entre 2 et 5, de manière préférée entre 2,6 et 3,6.

10.  Dispositif selon l'une quelconque des revendications 1 à 9, dans lequel le diamètre des fibres poreuses est supérieur à 0,1 micromètre et inférieur à 1 000 micromètres.

11.  Dispositif selon l'une quelconque des revendications 1 à 10, dans lequel la surface spécifique ($S_{BET}$) des fibres poreuses est supérieure à 600 m2.g-1 et les fibres poreuses présentent une porosité de sorte que plus de 30 % du volume poreux de chacune des fibres poreuses est constitué par des pores de taille inférieure à 2 nm.

12.  Dispositif selon l'une des revendications 1 à 11, dans lequel l'apport en oxygène est réalisé par une entrée d'air bullé dans la solution électrolytique.

13.  Dispositif selon l'une des revendications 1 à 12, dans lequel le dispositif est un réacteur discontinu permettant de traiter de manière séquentielle un volume d'eau.

14.  Dispositif selon l'une des revendications 1 à 12, dans lequel le dispositif est un réacteur colonne de filtration en continu d'un écoulement pour lequel les fibres poreuses utilisées in-situ dans le réacteur pour filtrer les polluants de l'écoulement sont régénérées in-situ dans le même réacteur.

15.  Utilisation d'un filtre composé de fibres poreuses de charbon actif comme surface électro-active cathode pour la réaction électro-Fenton, les fibres poreuses générant à leur surface du $H_2O_2$ pendant la réaction électro-Fenton, dans le dispositif selon l'une des revendications 1 à 14, pour régénérer les fibres poreuses de charbon actif chargées en polluants organiques, ledit filtre ayant été préalablement chargé en polluants organiques par filtration d'eau polluée ou d'air pollué.

16.  Utilisation selon la revendication 15, lesdites fibres poreuses de charbon actif se présentant sous forme de feutre ou de tissu.

**Patentansprüche**

1.  Vorrichtung zur Regeneration von Aktivkohle, umfassend mindestens eine elektrochemische Zelle, umfassend:

    ■ mindestens eine Kathode und mindestens eine Anode, die in eine elektrolytische Lösung eingetaucht sind:

      - mit porösen Aktivkohlefasern, die als elektroaktive Oberfläche an der Kathode verwendet werden und auf ihrer Oberfläche während der Elektro-Fenton-Reaktion die Erzeugung von $H_2O_2$ ermöglichen, poröse Fasern, auf denen organische Schadstoffe adsorbiert werden und die als Filter für organische Schadstoffe dienten;
      - wobei die Anode ein nichtaktives Anodenmaterial zum Ausführen einer anodischen Oxidation von organischen Schadstoffen umfasst, wobei das nichtaktive Anodenmaterial als ein Material definiert ist, das eine Überspannung bei Sauerstofffreisetzung von mehr als 0,4 V aufweist, wobei das nichtaktive Anodenmaterial aus Bor-dotiertem Diamant (BDD) oder einem substöchiometrischen Titanoxid ist;

    ■ eine elektrolytische Lösung mit:

      - eine Sauerstoffzufuhr, die dazu vorgesehen ist, während der Regeneration der Aktivkohle in der Form von porösen Fasern kontinuierlich zu sein;
      - eine anfängliche Zufuhr von $Fe^{2+}$-Ionen, die dazu vorgesehen ist, im Verlauf der Elektro-Fenton-Reaktion kontinuierlich regeneriert zu werden;

    wobei die Vorrichtung ermöglicht, während der Elektro-Fenton-Reaktion oxidierende Spezies auf der Ebene der Kathode und auf der Ebene der Anode zu erzeugen, wobei die an der Anode durch die anodische Oxidation erzeugten oxidierenden Spezies mindestens sind: •OH, $O_3$, vorzugsweise: •OH, $O_3$, $SO_4^{•-}$ und $S_2O_8^{2-}$, wobei diese oxidierenden Spezies die organischen Schadstoffe auf der Ebene der Anode, der Kathode und der elektrolytischen Lösung mineralisieren.

2. Vorrichtung nach Anspruch 1, wobei die elektroaktive Oberfläche der Kathode mindestens 90 % poröse Aktivkohlefasern umfasst.

3. Vorrichtung nach Anspruch 1 oder 2, wobei die elektroaktive Oberfläche der Kathode einzig poröse Aktivkohlefasern umfasst.

4. Vorrichtung nach einem der Ansprüche 1 bis 3, wobei die porösen Aktivkohlefasern in der Form von Gewebe vorliegen.

5. Vorrichtung nach einem der Ansprüche 1 bis 3, wobei die porösen Aktivkohlefasern in der Form von Filz vorliegen.

6. Vorrichtung nach einem der Ansprüche 1 bis 5, wobei die Aktivkohle in der Form von porösen Fasern, die als Filter für organische Schadstoffe dienen, mit organischen Schadstoffen gesättigt ist.

7. Vorrichtung nach einem der Ansprüche 1 bis 6, wobei die anfängliche Zufuhr von $Fe^{2+}$-Ionen eine katalytische Konzentration in der elektrolytischen Lösung von mehr als $10^{-5}$ M und weniger als $10^{-2}$ M aufweist.

8. Vorrichtung nach einem der Ansprüche 1 bis 7, wobei die auf den porösen Fasern der Kathode adsorbierten organischen Schadstoffe Phenolverbindungen umfassen.

9. Vorrichtung nach einem der Ansprüche 1 bis 8, wobei der pH-Wert zwischen 2 und 5, vorzugsweise zwischen 2,6 und 3,6 eingestellt wird.

10. Vorrichtung nach einem der Ansprüche 1 bis 9, wobei der Durchmesser von porösen Fasern größer als 0,1 Mikrometer und kleiner als 1000 Mikrometer ist.

11. Vorrichtung nach einem der Ansprüche 1 bis 10, wobei die spezifische Oberfläche ($S_{BET}$) von porösen Fasern größer als 600 $m^2.g^{-1}$ ist und die porösen Fasern eine derartige Porosität aufweisen, dass mehr als 30 % des Porenvolumens jeder der porösen Fasern von Poren mit einer Größe von weniger als 2 nm gebildet wird.

12. Vorrichtung nach einem der Ansprüche 1 bis 11, wobei die Sauerstoffzufuhr durch eine Einführung von Luftblasen in die elektrolytische Lösung ausgeführt wird.

13. Vorrichtung nach einem der Ansprüche 1 bis 12, wobei die Vorrichtung ein Chargenreaktor ist, der ermöglicht, ein Wasservolumen sequentiell zu verarbeiten.

14. Vorrichtung nach einem der Ansprüche 1 bis 12, wobei die Vorrichtung ein kontinuierlicher Säulenreaktor zur Filtration eines Flusses ist, für den die porösen Fasern, die in situ in dem Reaktor zum Filtrieren der Schadstoffe des Flusses verwendet werden, in situ in demselben Reaktor regeneriert werden.

15. Verwendung eines Filters, der sich aus porösen Aktivkohlefasern zusammensetzt, als elektroaktive Kathodenoberfläche für die Elektro-Fenton-Reaktion, wobei die porösen Fasern während der Elektro-Fenton-Reaktion auf ihrer Oberfläche $H_2O_2$ erzeugen, in der Vorrichtung nach einem der Ansprüche 1 bis 14 zum Regenerieren der mit organischen Schadstoffen beladenen porösen Aktivkohlefasern, wobei der Filter vorher durch Filtration von verunreinigtem Wasser oder verunreinigter Luft mit organischen Schadstoffen beladen wurde.

16. Verwendung nach Anspruch 15, wobei die porösen Aktivkohlefasern in der Form von Filz oder Gewebe vorliegen.

**Claims**

1. Device for regenerating activated carbon, comprising at least one electrochemical cell comprising:

■ at least one cathode and at least one anode immersed in an electrolyte solution:

- with porous fibres of activated carbon used as an electroactive surface at the cathode and allowing their surface to generate $H_2O_2$ during the electro-Fenton reaction, porous fibres on which organic pollutants are adsorbed and which served as a filter for organic pollutants;
- the anode comprising a non-active anode material to perform anodic oxidation of organic pollutants, the non-active anode material being defined as a material having an oxygen evolution overvoltage greater than 0.4 V, the non-active anode material being boron-doped diamond (BDD) or sub-stoichiometric titanium oxide;

■ an electrolyte solution with:

- an oxygen supply designed to be continuous during the regeneration of the activated carbon in the form of porous fibres;
- an initial supply of $Fe^{2+}$ ions designed to be continuously regenerated during the electro-Fenton reaction;

the device making it possible, during the electro-Fenton reaction, to create oxidizing species at the cathode and anode, the oxidizing species created at the anode by anodic oxidation being at least: •OH, $O_3$, preferably: •OH, $O_3$, $SO_4$•- and $S_2O_8^{2-}$, these oxidizing species mineralizing the organic pollutants at the anode and the cathode and in the electrolyte solution.

2. Device according to claim 1, wherein the electroactive surface of the cathode comprises at least 90% of the porous fibres of activated carbon.

3. Device according to claim 1 or 2, wherein the electroactive surface of the cathode comprises only the porous fibres of activated carbon.

4. Device according to any one of claims 1 to 3, wherein the porous fibres of activated carbon are in the form of a fabric.

5. Device according to any one of claims 1 to 3, wherein the porous fibres of activated carbon are in the form of a felt.

6. Device according to any one of claims 1 to 5, wherein the activated carbon in the form of porous fibres used for the organic pollutant filter is saturated in organic pollutants.

7. Device according to any one of claims 1 to 6, wherein the initial supply of $Fe^{2+}$ ions has a catalytic concentration in the electrolyte solution greater than $10^{-5}$ M and less than $10^{-2}$ M.

8. Device according to any one of claims 1 to 7, wherein the organic pollutants adsorbed on the porous fibres of the cathode comprise phenol compounds.

9. Device according to any one of claims 1 to 8, wherein the pH is adjusted between 2 and 5, preferably between 2.6 and 3.6.

10. Device according to any one of claims 1 to 9, wherein the diameter of the porous fibres is greater than 0.1 micrometre and less than 1000 micrometres.

11. Device according to any one of Claims 1 to 10, wherein the specific surface area ($S_{BET}$) of the porous fibres is greater than 600 $m^2$.g-1 and the porous fibres have a porosity such that more than 30% of the porous volume of each of the porous fibres consists of pores of size less than 2 nm.

12. Device according to one of claims 1 to 11, wherein the oxygen is supplied by an input of bubbled air in the electrolyte solution.

13. Device according to one of claims 1 to 12, wherein the device is a discontinuous reactor making it possible to sequentially treat a volume of water.

14. Device according to one of claims 1 to 12, wherein the device is a column reactor for the continuous filtration of a flow for which the porous fibres used in situ in the reactor to filter pollutants from the flow are regenerated in situ in the same reactor.

**15.** Use of a filter composed of porous fibres of activated carbon as cathode electroactive surface for the electro-Fenton reaction, the porous fibres generating $H_2O_2$ at their surface during the electro-Fenton reaction, in the device according to one of the claims 1 to 14, to regenerate the porous fibres of activated carbon loaded with organic pollutants, said filter having been previously loaded with organic pollutants by filtration of polluted water or polluted air.

**16.** Use according to claim 15, said porous fibres of activated carbon being in the form of felt or fabric.

**FIGURE 1**

FIGURE 2

FIGURE 3

FIGURE 4

FIGURE 5

FIGURE 6

FIGURE 7A

FIGURE 7B

FIGURE 8

FIGURE 9

FIGURE 10

FIGURE 11

FIGURE 12

Tissu CA          Feutre CA

FIGURE 13

FIGURE 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GUPTA, V. K.** Suhas. Application of low-cost adsorbents for dye removal - A review. *J. Environ. Manage.,* 2009, vol. 90 (8), 2313-2342
- **DABROWSKI, A. ; PODKOSCIELNY, P. ; HUBICKI, Z. ; BARCZAK, M.** Adsorption of phenolic compounds by activated carbon-a critical review. *Chemosphere,* 2005, vol. 58 (8), 1049-1070
- **MORENO-CASTILLA, C.** Adsorption of organic molecules from aqueous solutions on carbon materials. *Carbon,* 2004, vol. 42 (1), 83-94
- **BINIAK, S. ; SZYMANSKI, G. ; SIEDLEWSKI, J. ; SWIATKOWSKI, A.** The characterization of activated carbons with oxygen and nitrogen surface groups. *Carbon,* 1997, vol. 35 (12), 1799-1810
- **KANNAN, N. ; SUNDARAM, M. M.** Kinetics and mechanism of removal of methylene blue by adsorption on various carbons-a comparative study. *Dyes Pigments,* 2001, vol. 51 (1), 25-40
- **ALVAREZ, P. M. ; BELTRAN, F. J. ; GOMEZ-SERRANO, V. ; JARAMILLO, J. ; RODRIGUEZ, E. M.** Comparison between thermal and ozone regenerations of spent activated carbon exhausted with phenol. *Water Res.,* 2004, vol. 38 (8), 2155-2165
- **BANUELOS, J. A. ; GARCIA-RODRIGUEZ, O. ; RODRIGUEZ-VALADEZ, F. J. ; MANRIQUEZ, J. ; BUSTOS, E. ; RODRIGUEZ, A. ; GODINEZ, L. A.** Cathodic polarization effect on the electro-Fenton regeneration of activated carbon. *J. Appl. Electrochem.,* 2015, vol. 45 (5), 523-531
- **XIAO, Y. ; HILL, J. M.** Impact of Pore Size on Fenton Oxidation of Methyl Orange Adsorbed on Magnetic Carbon Materials: Trade-Off between Capacity and Regenerability. *Environ. Sci. Technol.,* 2017, vol. 51 (8), 4567-4575
- **BROWN, N. W. ; ROBERTS, E. P. L. ; CHASIOTIS, A. ; CHERDRON, T. ; SANGHRAJKA, N.** Atrazine removal using adsorption and electrochemical regeneration. *Water Res.,* 2004, vol. 38 (13), 3067-3074
- **HUSSAIN, S. N. ; ASGHAR, H. M. A. ; CAMPEN, A. K. ; BROWN, N. W. ; ROBERTS, E. P. L.** Breakdown products formed due to oxidation of adsorbed phenol by electrochemical regeneration of a graphite adsorbent. *Electrochimica Acta,* 2013, vol. 110, 550-559
- **BRILLAS, E. ; SIRÉS, I. ; OTURAN, M. A.** Electro-Fenton process and related electrochemical technologies based on Fenton's reaction chemistry. *Chem. Rev.,* 2009, vol. 109 (12), 6570-6631
- **SIRÉS, I. ; BRILLAS, E. ; OTURAN, M. A. ; RODRIGO, M. A. ; PANIZZA, M.** Electrochemical advanced oxidation processes: today and tomorrow. A review. *Environ. Sci. Pollut. Res.,* 2014, vol. 21 (14), 8336-8367
- **MARTINEZ-HUITLE, C. A. ; RODRIGO, M. A. ; SIRÉS, I. ; SCIALDONE, O.** Single and Coupled Electrochemical Processes and Reactors for the Abatement of Organic Water Pollutants: A Critical Review. *Chem. Rev.,* 2015, vol. 115 (24), 13362-13407
- **OTURAN, N. ; VAN HULLEBUSCH, E. D. ; ZHANG, H. ; MAZEAS, L. ; BUDZINSKI, H. ; LE MENACH, K. ; OTURAN, M. A.** Occurrence and Removal of Organic Micropollutants in Landfill Leachates Treated by Electrochemical Advanced Oxidation Processes. *Environ. Sci. Technol.,* 2015, vol. 49 (20), 12187-12196
- **BAÑUELOS, J. A. ; RODRÍGUEZ, F. J. ; MANRÍQUEZ ROCHA, J. ; BUSTOS, E. ; RODRÍGUEZ, A. ; CRUZ, J. C. ; ARRIAGA, L. G. ; GODÍNEZ, L. A.** Novel electro-Fenton approach for regeneration of activated carbon. *Environ. Sci. Technol.,* 2013, vol. 47 (14), 7927-7933
- **SUZUKI, M.** Activated carbon fiber: Fundamentals and applications. *Carbon,* 1994, vol. 32 (4), 577-586
- **BRASQUET, C. ; ROUSSY, J. ; SUBRENAT, E. ; CLOIREC, P. L.** Adsorption and Selectivity of Activated Carbon Fibers Application to Organics. *Environ. Technol.,* 1996, vol. 17 (11), 1245-1252
- **BRASQUET, C. ; LE CLOIREC, P.** Adsorption onto activated carbon fibers: Application to water and air treatments. *Carbon,* 1997, vol. 35 (9), 1307-1313
- **PANIZZA, M. ; CERISOLA, G.** Direct and mediated anodic oxidation of organic pollutants. *Chem. Rev.,* 2009, vol. 109 (12), 6541-6569
- **TRELLU, C. ; GANZENKO, O. ; PAPIRIO, S. ; PECHAUD, Y. ; OTURAN, N. ; HUGUENOT, D. ; VAN HULLEBUSCH, E. D. ; ESPOSITO, G. ; OTURAN, M. A.** Combination of anodic oxidation and biological treatment for the removal of phenanthrene and Tween 80 from soil washing solution. *Chem. Eng. J.,* 2016, vol. 306, 588-596

- **ÖZCAN, A. ; SAHIN, Y. ; KOPARAL, A. S. ; OTURAN, M. A.** A comparative study on the efficiency of electro-Fenton process in the removal of propham from water. *Appl. Catal. B-Environ.,* 2009, vol. 89 (3-4), 620-626
- **RODRIGUES, L. A. ; RIBEIRO, L. A. DE S. ; THIM, G. P. ; FERREIRA, R. R. ; ALVAREZ-MENDEZ, M. O. ; COUTINHO, A. DOS R.** Activated carbon derived from macadamia nut shells: an effective adsorbent for phenol removal. *J. Porous Mater.,* 2013, vol. 20 (4), 619-627
- **HAMDAOUI, O. ; NAFFRECHOUX, E. ; SUPTIL, J. ; FACHINGER, C.** Ultrasonic desorption of p-chlorophenol from granular activated carbon. *Chem. Eng. J.,* 2005, vol. 106 (2), 153-161
- **PIMENTEL, M. ; OTURAN, N. ; DEZOTTI, M. ; OTURAN, M. A.** Phenol degradation by advanced electrochemical oxidation process electro-Fenton using a carbon felt cathode. *Appl. Catal. B-Environ.,* 2008, vol. 83 (1-2), 140-149
- **HAMDAOUI, O. ; NAFFRECHOUX, E.** Modeling of adsorption isotherms of phenol and chlorophenols onto granular activated carbon: Part I. Two-parameter models and equations allowing determination of thermodynamic parameters. *J. Hazard. Mater.,* 2007, vol. 147 (1-2), 381-394
- **GILES, C. H. ; MACEWAN, T. H. ; NAKHWA, S. N. ; SMITH, D.** 786. Studies in adsorption. Part XI. A system of classification of solution adsorption isotherms, and its use in diagnosis of adsorption mechanisms and in measurement of specific surface areas of solids. *J. Chem. Soc. Resumed,* 1960, vol. 0, 3973-3993
- **PELEKANI, C. ; SNOEYINK, V. L.** Competitive adsorption between atrazine and methylene blue on activated carbon: the importance of pore size distribution. *Carbon,* 2000, vol. 38 (10), 1423-1436
- **KASAOKA, S. ; SAKATA, Y. ; TANAKA, E. ; NAITOH, R.** Design of molecular-sieve carbon. Studies on the adsorption of various dyes in the liquid phase. *Int. Chem. Eng.,* 1989, vol. 1987 (29), 734-742
- **LIU, Q.-S. ; ZHENG, T. ; WANG, P. ; JIANG, J.-P. ; LI, N.** Adsorption isotherm, kinetic and mechanism studies of some substituted phenols on activated carbon fibers. *Chem. Eng. J.,* 2010, vol. 157 (2-3), 348-356
- **MOON, H. ; KOOK LEE, W.** Intraparticle diffusion in liquid-phase adsorption of phenols with activated carbon in finite batch adsorber. *J. Colloid Interface Sci.,* 1983, vol. 96 (1), 162-171
- **WU, F.-C. ; TSENG, R.-L. ; HUANG, S.-C. ; JUANG, R.-S.** Characteristics of pseudo-second-order kinetic model for liquid-phase adsorption: A mini-review. *Chem. Eng. J.,* 2009, vol. 151 (1-3), 1-9
- **AZIZIAN, S.** Kinetic models of sorption: A theoretical analysis. *J. Colloid Interface Sci.,* 2004, vol. 276 (1), 47-52
- **ANIA, C. O. ; BÉGUIN, F.** Electrochemical regeneration of activated carbon cloth exhausted with bentazone. *Environ. Sci. Technol.,* 2008, vol. 42 (12), 4500-4506
- **NARBAITZ, R. M. ; MCEWEN, J.** Electrochemical regeneration of field spent GAC from two water treatment plants. *Water Res.,* 2012, vol. 46 (15), 4852-4860
- **ZHAN, J. ; WANG, Y. ; WANG, H. ; SHEN, W. ; PAN, X. ; WANG, J. ; YU, G.** Electro-peroxone regeneration of phenol-saturated activated carbon fiber: The effects of irreversible adsorption and operational parameters. *Carbon,* 2016, vol. 109, 321-330
- **TRELLU, C. ; PÉCHAUD, Y. ; OTURAN, N. ; MOUSSET, E. ; HUGUENOT, D. ; HULLEBUSCH, E. D. VAN ; ESPOSITO, G. ; OTURAN, M. A.** Comparative study on the removal of humic acids from drinking water by anodic oxidation and electro-Fenton processes: Mineralization efficiency and modelling. *Appl. Catal. B Environ.,* 2016, vol. 194, 32-41
- **MOUSSET, E. ; FRUNZO, L. ; ESPOSITO, G. ; VAN HULLEBUSCH, E. D. ; OTURAN, N. ; OTURAN, M. A.** A complete phenol oxidation pathway obtained during electro-Fenton treatment and validated by a kinetic model study. *Appl. Catal. B-Environ.,* 2016, vol. 180, 189-198
- **BAILEY, S. I. ; RITCHIE, I. M. ; HEWGILL, F. R.** The construction and use of potential-pH diagrams in organic oxidation-reduction reactions. *J. Chem. Soc. Perkin Trans.,* 1983, vol. 2 (5), 645-652
- **OTURAN, M. A. ; PIMENTEL, M. ; OTURAN, N. ; SIRÉS, I.** Reaction sequence for the mineralization of the short-chain carboxylic acids usually formed upon cleavage of aromatics during electrochemical Fenton treatment. *Electrochimica Acta,* 2008, vol. 54 (2), 173-182
- **SADEZKY, A. ; MUCKENHUBER, H. ; GROTHE, H. ; NIESSNER, R. ; PÖSCHL, U.** Raman microspectroscopy of soot and related carbonaceous materials: Spectral analysis and structural information. *Carbon,* 2005, vol. 43 (8), 1731-1742
- **CUESTA, A. ; DHAMELINCOURT, P. ; LAUREYNS, J. ; MARTÍNEZ-ALONSO, A. ; TASCÓN, J. M. D.** Raman microprobe studies on carbon materials. *Carbon,* 1994, vol. 32 (8), 1523-1532
- **GARCIA-SEGURA, S. ; BRILLAS, E.** Mineralization of the recalcitrant oxalic and oxamic acids by electrochemical advanced oxidation processes using a boron-doped diamond anode. *Water Res.,* 2011, vol. 45 (9), 2975-2984
- **RADJENOVIC, J. ; SEDLAK, D. L.** Challenges and Opportunities for Electrochemical Processes as Next-Generation Technologies for the Treatment of Contaminated Water. *Environ. Sci. Technol.,* 2015, vol. 49 (19), 11292-11302

- **COMNINELLIS, C.** Electrocatalysis in the electrochemical conversion/combustion of organic pollutants for waste water treatment. *Electrochim. Acta,* 1994, vol. 39, 1857

- **COMNINELLIS, C. ; KAPALKA, A. ; MALATO, S. ; PARSONS, S.A. ; POULIOS, I. ; MANTZAVINOS, D.** Advanced oxidation processes for water treatment: Advances and trends for R&D. *J. Chem. Technol. Biotechnol.,* 2008, vol. 83, 769-776, https://doi.org/10.1002/jctb.1873